(19) Europäisches Patentamt
European Patent Office
Office européen des brevets

(11) **EP 1 959 364 A2**

(12) **EUROPEAN PATENT APPLICATION**

(43) Date of publication:
20.08.2008 Bulletin 2008/34

(51) Int Cl.:
**G06F 17/30** (2006.01)

(21) Application number: 08250568.6

(22) Date of filing: 19.02.2008

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: 19.02.2007 JP 2007038349
05.12.2007 JP 2007315243

(71) Applicant: **Seiko Epson Corporation**
**Tokyo 160-0811 (JP)**

(72) Inventor: **Kasahara, Hirokazu**
**c/o Seiko Epson Corporation**
**Suwa-shi**
**Nagano-ken 392-8502 (JP)**

(74) Representative: **Cloughley, Peter Andrew et al**
**Miller Sturt Kenyon**
**9 John Street**
**London WC1N 2ES (GB)**

(54) **Category classification apparatus, category classification method, and storage medium storing a program**

(57)    A category classification apparatus includes: an overall classifier that classifies a category to which an image belongs, based on an overall characteristic amount that is obtained from image data, the overall characteristic amount indicating an overall characteristic of the image represented by the image data; and a partial classifier that classifies a category to which the image belongs, based on partial characteristic amounts that are obtained from partial image data included in the image data, the partial characteristic amounts indicating characteristics of portions of the image.

FIG. 4

**Description**

CROSS-REFERENCE TO RELATED APPLICATIONS

The present application claims priority upon Japanese Patent Application No. 2007-038349 filed on February 19, 2007, and Japanese Patent Application No. 2007-315243 filed on December 5, 2007, which are herein incorporated by reference.

BACKGROUND

Technical Field

The present invention relates to category classification apparatuses, category classification methods, and storage media storing a program.

Related Art

For images to be classified, apparatuses have been proposed that classify categories to which the images belong and perform processing that is suitable for the classified category. For example, an apparatus has been proposed, which classifies the category of an image based on the image data and performs enhancement processing that is suitable for the classified category (see WO 2004/30373). With this apparatus, the color hue of pixels within a subject region is calculated based on the image data. Then, the category (portrait, landscape etc.) of the image is classified in accordance with the proportion of pixels having a specific hue.

For this kind of category classification, there is a demand for improved classification accuracy. This is because it is possible to obtain better results also for the following processes if the classification accuracy is improved. For example, with the above-noted apparatus, it would be possible to achieve an even more suitable enhancement, if categories were classified with greater accuracy.

SUMMARY

An advantage of some aspects of the present invention is that, it is possible to improve the accuracy with which categories are classified.

An aspect of the invention is a category classification apparatus includes an overall classifier that classifies a category to which an image belongs, based on an overall characteristic amount that is obtained from image data, the overall characteristic amount indicating an overall characteristic of the image represented by the image data; and a partial classifier that classifies a category to which the image belongs, based on partial characteristic amounts that are obtained from partial image data included in the image data, the partial characteristic amounts indicating characteristics of portions of the image.

Other features of the present invention will become clear by reading the description of the present specification with reference to the accompanying drawings.

BRIEF DESCRIPTION OF THE DRAWINGS

For a more complete understanding of the present invention and the advantages thereof, reference is now made to the following description taken in conjunction with the accompanying drawings wherein:

Fig. 1 is a diagram illustrating a multifunctional apparatus 1 and a digital still camera;

Fig. 2A is a diagram illustrating the configuration of the printing mechanism of the multifunctional apparatus 1;

Fig. 2B is a diagram illustrating a storage section having a memory;

Fig. 3 is a block diagram illustrating the functions realized by the printer-side controller;

Fig. 4 is a diagram illustrating an overview over the configuration of the scene classification section;

Fig. 5 is a diagram illustrating the specific configuration of the scene classification section;

Fig. 6 is a flowchart illustrating how the partial characteristic amounts are obtained;

Fig. 7 is a diagram illustrating a linear support vector machine;

Fig. 8 is a diagram illustrating a non-linear support vector machine;

Fig. 9 is a diagram illustrating recall ratio and precision;

Fig. 10 is a graph showing the relation between the recall ratio and the classification function value obtained by a landscape scene classifier and a graph showing the relation between the precision and the classification function value;

Fig. 11 is a graph showing the relation between the recall ratio and the classification function value obtained by an evening scene classifier and a graph showing the relation between the precision and the classification function value;

Fig. 12 is a graph showing the relation between the recall ratio and the classification function value obtained by a night scene classifier and a graph showing the relation between the precision and the classification function value;

Fig. 13 is a graph showing the relation between the recall ratio and the classification function value obtained by a flower scene classifier and a graph showing the relation between the precision and the classification function value;

Fig. 14 is a graph showing the relation between the recall ratio and the classification function value obtained by an autumnal scene classifier and a graph showing the relation between the precision and the classification function value;

Fig. 15 is a diagram illustrating among others the probability thresholds of the landscape scene classifier of the overall classifier;

Fig. 16 is a diagram illustrating the probability thresholds used by the overall sub-classifiers and the judgment criteria of the partial sub-classifiers;

Fig. 17 is a diagram illustrating a positive threshold;

Fig. 18 is a diagram illustrating a negative threshold;

Fig. 19 is a diagram illustrating the other negative threshold;

Fig. 20 is a diagram illustrating details of the enhancement of the image with the image enhancement section;

Fig. 21 is a flowchart illustrating the image classification process;

Fig. 22 is a flowchart illustrating the overall classification process; and

Fig. 23 is a flowchart illustrating the partial classification process.

DESCRIPTION OF EXEMPLARY EMBODIMENTS

At least the following matters will be made clear by the present specification and the accompanying drawings.

A category classification apparatus can be realized that comprises:

an overall classifier that classifies a category to which an image belongs, based on an overall characteristic amount that is obtained from image data, the overall characteristic amount indicating an overall characteristic of the image represented by the image data; and

a partial classifier that classifies a category to which the image belongs, based on partial characteristic amounts that are obtained from partial image data included in the image data, the partial characteristic amounts indicating characteristics of portions of the image.

With such a category classification apparatus, the overall classifier classifies the category to which an image to be classified belongs based on an overall characteristic amount, and the partial classifier classifies the category to which the image belongs based on partial characteristic amounts. Thus, the accuracy with which categories are classified can be improved.

In this category classification apparatus, it is preferable that the overall classifier includes a plurality of overall sub-classifiers that classify whether the image belongs to a predetermined category, the number of the overall sub-classifiers corresponding to the number of the predetermined categories.

With such a category classification apparatus, the properties can be optimized for each overall sub-classifier individually, and the classification accuracy can be increased.

In this category classification apparatus, it is preferable that, if the image has not been classified as belonging to a first category by a first overall sub-classifier, then the overall classifier causes a second overall sub-classifier that is different from the first overall sub-classifier to classify whether the image belongs to a second category that is different from the first category.

With such a category classification apparatus, classification is carried out by each of the overall sub-classifiers individually, so that the reliability of the classification can be increased.

In this category classification apparatus, it is preferable that if, according to probability information indicating whether a probability that the image belongs to a predetermined category is large or small, the probability indicated by the probability information is within a probability range, specified by a probability threshold, for which it can be decided that the image belongs to the predetermined category, then the overall sub-classifiers classify the image as belonging to the predetermined category.

With such a category classification apparatus, the classification is carried out based on probability information, so that a high level of both processing speed and classification accuracy can be attained.

In this category classification apparatus, it is preferable that each of the overall sub-classifiers includes a support vector machine that obtains the probability information from the overall characteristic amount.

With such a category classification apparatus, the accuracy of the obtained probability information is increased even for limited training data.

In this category classification apparatus, it is preferable that the image data includes a plurality of pixels including color information, and the overall sub-classifiers classify the category to which the image belongs, taking a characteristic amount obtained from the color information and appended information that is appended to the image data as the overall characteristic amounts.

With such a category classification apparatus, the category to which the image belongs can be classified with high accuracy.

In this category classification apparatus, it is preferable that the appended information is appended Exif information.

With such a category classification apparatus, the category to which the image belongs can be classified with high accuracy.

In this category classification apparatus, it is preferable that the characteristic amounts obtained from the color information include average color information obtained by averaging a plurality of sets of the color information, variance information indicating a variance based on a plurality of sets of the color information, and moment information indicating a moment based on a plurality of sets of the color information.

With such a category classification apparatus, the category to which the image belongs can be classified with high accuracy.

In this category classification apparatus, it is preferable that, if the category to which the image belongs cannot be decided with the overall classifier, the partial classifier classifies the category to which the image belongs.

With such a category classification apparatus, the partial sub-classifiers, which tend to have a larger processing amount, perform the classification after the overall sub-classifiers, so that the processing can be made more efficient.

In this category classification apparatus, it is preferable that the partial classifier includes a plurality of partial sub-classifiers that classify whether the image belongs to a predetermined category, the number of partial sub-classifiers corresponding to the number of the predetermined categories.

With such a category classification apparatus, the properties of the partial sub-classifiers can be optimized individually, so that the classification accuracy can be improved.

In this category classification apparatus, it is preferable that the overall classifier includes a plurality of overall sub-classifiers that classify whether the image belongs to a predetermined category, the number of the overall sub-classifiers corresponding to the number of the predetermined categories, and the partial classifier includes a number of partial sub-classifiers that classify whether the image belongs to a predetermined category, the number being smaller than the number of predetermined categories that can be classified by the overall classifier.

With such a category classification apparatus, the number of the partial sub-classifiers, which tend to have a larger processing amount, is smaller than that of the overall sub-classifiers, so that the processing can be made more efficient.

In this category classification apparatus, it is preferable that, if the image has not been classified as belonging to a first category by a first partial sub-classifier, then the partial classifier causes a second partial sub-classifier that is different from the first partial sub-classifier to classify whether the image belongs to a second category that is different from the first category.

With such a category classification apparatus, the classification is carried out by each partial sub-identifier individually, so that the reliability of the classification can be improved.

In this category classification apparatus, it is preferable that the partial sub-classifiers classify for each of a plurality of partial characteristic amounts obtained from the plurality of sets of partial image data whether or not the portion represented by that partial image data belongs to the predetermined category, and classify whether the image belongs to the predetermined category, based on the number of portions that have been classified as belonging to the predetermined category.

With such a category classification apparatus, the classification that an object to be classified belongs to a predetermined category is based on the number of portions that are classified as belonging to the predetermined category, so that the classification processing can be made more efficient.

In this category classification apparatus, it is preferable that the partial sub-classifiers classify whether or not the portion belongs to the predetermined category, based on probability information indicating whether a probability that the portion belongs to the specific category is large or small.

with such a category classification apparatus, the processing can be made more efficient.

In this category classification apparatus, it is preferable that each of the partial sub-identifiers includes a support vector machine that obtains the probability information from the partial characteristic amounts.

With such a category classification apparatus, the accuracy of the obtained probability information is improved even with limited training data.

In this category classification apparatus, it is preferable that the partial image data includes a plurality of pixels including color information, and the partial sub-classifiers classify the category to which the image belongs, taking characteristic amounts obtained from the color information as the partial characteristic amounts.

With such a category classification apparatus, the category to which the image belongs can be classified with high accuracy.

In this category classification apparatus, it is preferable that the characteristic amounts obtained from the color information include average color information obtained by averaging a plurality of sets of the color information, and variance information indicating a variance based on a plurality of sets of the color information.

With such a category classification apparatus, the category to which the image belongs can be classified with high accuracy.

It is preferable that this category classification apparatus includes a consolidated classifier that classifies the category to which the image belongs for images whose category cannot be classified by neither the overall classifier nor the partial classifier, and classifies a predetermined category having probability information indicating that its probability is the highest among the probability information obtained for each of the plurality of predetermined categories as the category to which the image belongs.

With such a category classification apparatus, the classification accuracy is further improved by the consolidated classifier.

It is preferable that this category classification apparatus includes a characteristic amount obtaining section that obtains the overall characteristic amount and the partial characteristic amounts from the image data.

It should furthermore become clear, that the following category classification method can be realized.

That is, a category classification method can be realized that includes classifying a category to which an image belongs, based on an overall characteristic amount that is obtained from image data, the overall characteristic amount indicating an overall characteristic of the image represented by the image data, and classifying a category to which the image belongs, based on partial characteristic amounts that are obtained from partial image data included in the image data, the partial characteristic amounts indicating characteristics of portions of the image.

It should furthermore become clear, that the following program for a category classification apparatus can be realized.

That is, a storage medium storing a program that is used for a category classification apparatus classifying a category to which image data belongs can be realized, the storage medium storing a program that lets the category classification apparatus classify a category to which an image belongs, based on an overall characteristic amount that is obtained from image data, the overall characteristic amount indicating an overall characteristic of the image represented by the image data; and classify a category to which the image belongs, based on partial characteristic amounts that are obtained from partial image data included in the image data, the partial characteristic amounts indicating characteristics of portions of the image.

First Embodiment

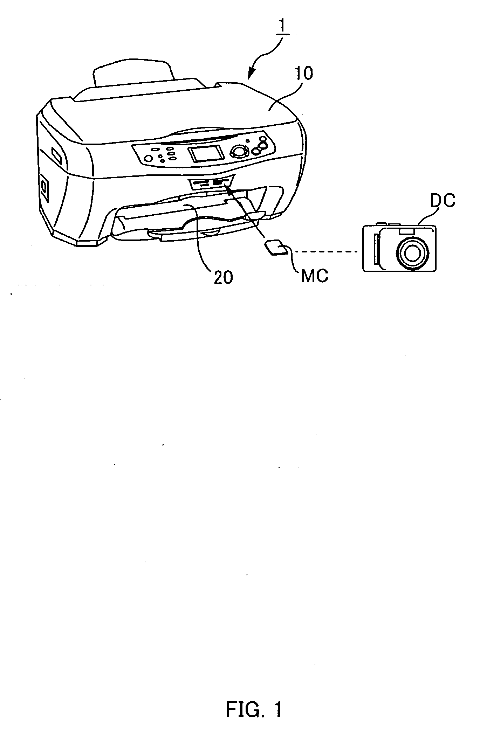

The following is an explanation of embodiments of the present invention. It should be noted that the following explanations take the multifunctional apparatus 1 shown in Fig. 1 as an example. This multifunctional apparatus 1 includes an image reading section 10 that obtains image data by reading an image printed on a medium, and an image printing section 20 that prints the image on a medium, based on the image data. The image printing section 20 prints the image on the medium in accordance with, for example, image data obtained by capturing an image with a digital still camera DC or image data obtained with the image reading section 10. In addition, this multifunctional apparatus 1 classifies scenes for an image that is targeted (also referred to in short as "targeted image" in the following), and enhances the data of the targeted image in accordance with the classification result or stores the enhanced image data in an external memory, such as a memory card MC. Here, the scenes in the images correspond to the categories to be classified. Accordingly, the multifunctional apparatus 1 functions as a category classification apparatus that classifies as yet unknown categories to be classified. Moreover, the multifunctional apparatus 1 also functions as a data enhancement apparatus that enhances data based on the classified categories and as a data storage apparatus that stores the enhanced data in an external memory.

Configuration of Multifunctional Apparatus 1

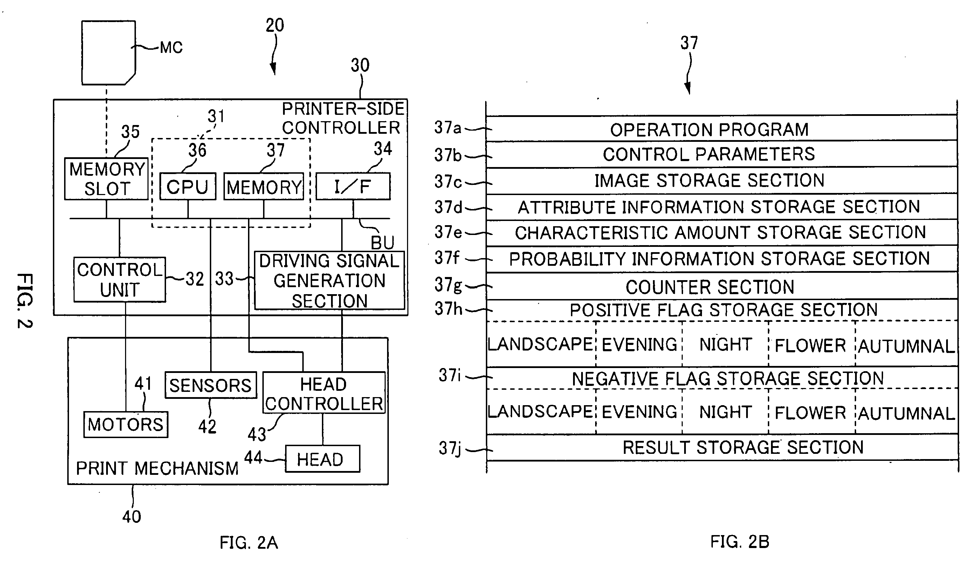

As shown in Fig. 2A, the image printing section 20 includes a printer-side controller 30 and a print mechanism 40.

The printer-side controller 30 is a component that carries out the printing control, such as the control of the print mechanism 40. The printer-side controller 30 shown in the figure includes a main controller 31, a control unit 32, a driving signal generation section 33, an interface 34, and a memory slot 35. These various components are communicably connected via a bus BU.

The main controller 31 is the central component responsible for control, and includes a CPU 36 and a memory 37. The CPU 36 functions as a central processing unit, and carries out various kinds of control operations in accordance with an operation program stored in the memory 37. Accordingly, the operation program includes code for realizing control operations. The memory 37 stores various kinds of information. As shown for example in Fig. 2B, a portion of the memory 37 is provided with a program storage section 37a storing the operation program, a parameter storage section 37b storing control parameters, an image storage section 37c storing image data, an attribute information storage section 37d storing Exif attribute information, a characteristic amount storage section 37e storing characteristic amounts, a probability information storage section 37f storing probability information, a counter section 37g functioning as a counter, a positive flag storage section 37h storing positive flags, a negative flag storage section 37i storing negative flags, and a result storage section 37j storing classification results. The various components constituted by the main controller 31 are explained later.

The control unit 32 controls for example motors 41 with which the print mechanism 40 is provided. The driving signal generation section 33 generates driving signals that are applied to driving elements (not shown in the figures) of a head 44. The interface 34 is for connecting to a host apparatus, such as a personal computer. The memory slot 35 is a component for mounting a memory card MC. When the memory card MC is mounted in the memory slot 35, the memory card MC and the main controller 31 are connected in a communicable manner. Accordingly, the main controller 31 is able to read information stored on the memory card MC and to store information on the memory card MC. For example, it can read image data created by capturing an image with the digital still camera DC or it can store enhanced image data, which has been subjected to enhancement processing or the like.

The print mechanism 40 is a component that prints on a medium, such as paper. The print mechanism 40 shown in the figure includes motors 41, sensors 42, a head controller 43, and a head 44. The motors 41 operate based on the control signals from the control unit 32. Examples for the motors 41 are a transport motor for transporting the medium and a movement motor for moving the head 44 (neither is shown in the figures). The sensors 42 are for detecting the state of the print mechanism 40. Examples for the sensors 42 are a medium detection sensor for detecting whether a medium is present or not, a transport detection sensor for detecting the transport of the medium, and a head position sensor for detecting the position of the head 44 (none of which is shown in the figures). The head controller 43 is for controlling the application of driving signals to the driving elements of the head 44. In this image printing section 20, the main controller 31 generates the head control signals in accordance with the image data to be printed. Then, the generated driving signals are sent to the head controller 43. The head controller 43 controls the application of driving signals, based on the received head control signals. The head 44 includes a plurality of driving elements that perform an operation for ejecting ink. The necessary portion of the driving signals that have passed through the head controller 43 is applied to these driving elements. Then, the driving elements perform an operation for ejecting ink in accordance with the applied necessary portion. Thus, the ejected ink lands on the medium and an image is printed on the medium.

Configuration of the Various Components Realized by the Printer-Side Controller 30

The following is an explanation of the various components realized by the printer-side controller 30. The CPU 36 of the main controller 31 performs a different operation for each of the plurality of operation modules (program units) constituting the operation program. At this time, the main controller 31 fulfills different functions for each operation module, either alone or in combination with the control unit 32 or the driving signal generation section 33. In the following explanations, it is assumed for convenience that the printer-side controller 30 is expressed as a separate device for each operation module.

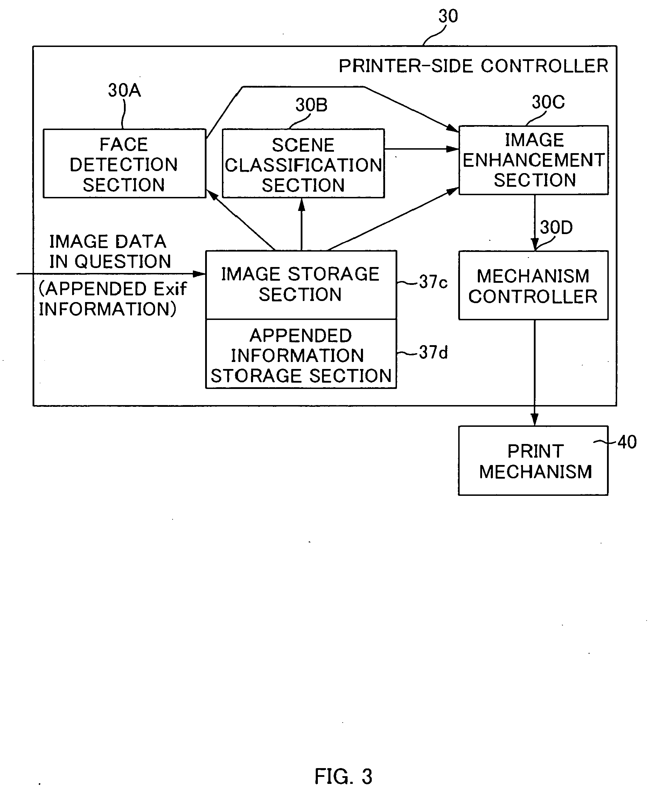

As shown in Fig. 3, the printer-side controller 30 includes an image storage section 37c, a face detection section 30A, a scene classification section 30B, an image enhancement section 30C, and a mechanism controller 30D. The image storage section 37c stores image data to be subjected to scene classification processing or enhancement processing. This image data is one kind of data to be classified and corresponds to the image data that is targeted. In the present embodiment, the targeted image data is constituted by RGB image data. This RGB image data is one type of image data that is constituted by a plurality of pixels including color information. The face detection section 30A classifies whether there is an image of a human face in the data of the targeted image, and classifies this as a corresponding scene. For example, the face detection section 30A judges whether an image of a human face is present, based on data of QVGA (320 x 240 pixels = 76800 pixels) size. Then, if an image of a face has been detected, the targeted image is sorted as a scene with people or as a commemorative photograph, based on the total area of the face image (this is explained later). The scene classification section 30B classifies the scene to which a targeted image belongs for which the scene could not be determined with the face detection section 30A. The image enhancement section 30C performs an enhancement in accordance with the scene to which the targeted image belongs, in accordance with the classification result of the face detection section 30A or the scene classification section 30B. The mechanism controller 30D controls the print mechanism 40 in accordance with the data of the targeted image. Here, if an enhancement of the data of the targeted image has been performed with the image enhancement section 30C, the mechanism controller 30D controls the print mechanism 40 in accordance with the enhanced image data. Of these sections, the face detection section 30A, the scene classification section 30B, and the image enhancement section 30C are constituted by the main controller 31. The mechanism controller 30D is constituted by the main controller 31, the control unit 32, and the driving signal generation section 33.

Configuration of Scene Classification Section 30B

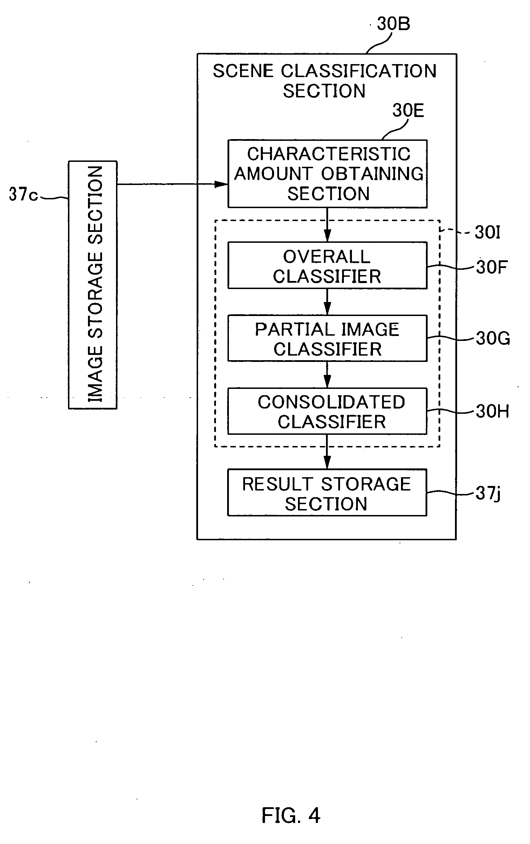

The following is an explanation of the scene classification section 30B. The scene classification section 30B of the present embodiment classifies whether a targeted image for which the scene has not been determined with the face detection section 30A belongs to a landscape scene, an evening scene, a night scene, a flower scene, an autumnal scene, or another scene. As shown in Fig. 4, the scene classification section 30B includes a characteristic amount obtaining section 30E, an overall classifier 30F, a partial image classifier 30G, a consolidated classifier 30H, and a result storage section 37j. Among these, the characteristic amount obtaining section 30E, the overall classifier 30F, the partial image classifier 30G, and the consolidated classifier 30H are constituted by the main controller 31. Moreover, the overall classifier 30F, the partial image classifier 30G, and the consolidated classifier 30H constitute a classification processing section 30I that performs a process of classifying the scene to which the targeted image belongs (this corresponds to the category to which the object to be classified belongs), based on at least one of a partial characteristic amount and an overall characteristic amount.

The Characteristic Amount Obtaining Section 30E

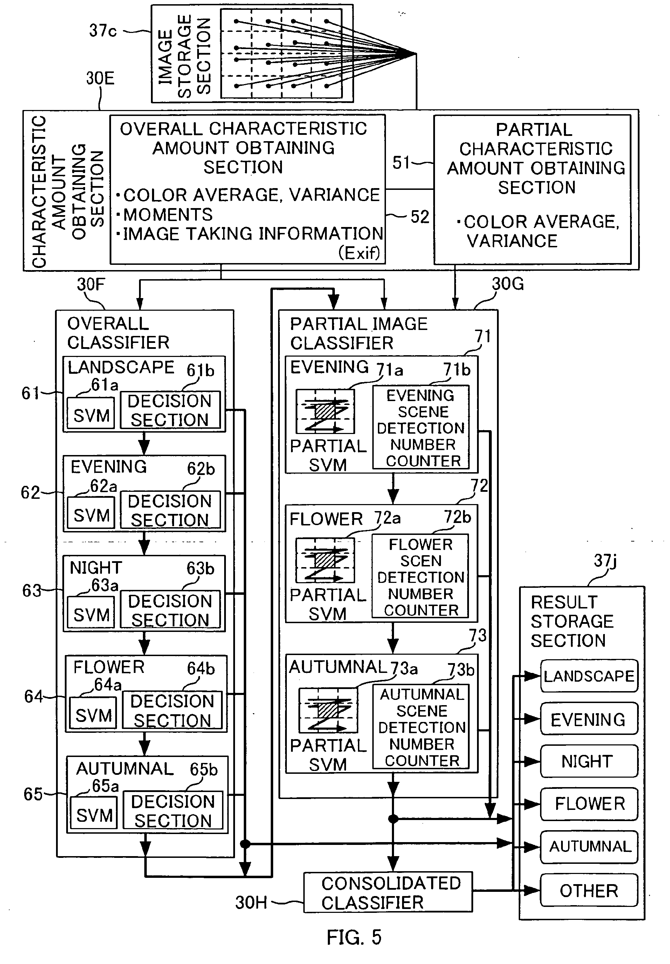

The characteristic amount obtaining section 30E obtains a characteristic amount indicating a characteristic of the targeted image from the data of the targeted image. This characteristic amount is used for the classification with the overall classifier 30F and the partial image classifier 30G. As shown in Fig. 5, the characteristic amount obtaining section 30E includes a partial characteristic amount obtaining section 51 and an overall characteristic amount obtaining section 52.

The partial characteristic amount obtaining section 51 obtains partial characteristic amounts for individual sets of partial data, based on partial data obtained by partitioning the data subjected to classification. These partial characteristic amounts represent a characteristic of one portion to be classified, corresponding to the partial data. In this embodiment, an image is subjected to classification. Accordingly, the partial characteristic amounts represent characteristic amounts for each of the plurality of regions into which the overall image has been partitioned (also referred to simply as "partial images"). More specifically, they represent the characteristic amounts of the partial images of 1/64 size that are obtained by partitioning the overall image into partial images corresponding to regions obtained by splitting width and height of the overall image into eight equal portions, that is, by partitioning the overall image into a grid shape. Moreover, the data of the targeted image corresponds to the data to be classified, the partial image data corresponds to partial data, and the pixels constituting the partial image data correspond to a plurality of samples constituting the partial data. It should be noted that the data of the targeted image in this embodiment is° data of QVGA size. Therefore, the partial image data is data of 1/64 of that size (40 x 30 pixels = 1200 pixels).

The partial characteristic amount obtaining section 51 obtains the color average and the color variance of the pixels constituting the partial image data as the partial characteristic amounts indicating the characteristics of the partial image. Consequently, the partial characteristic amounts are obtained based on the partial image data, and correspond to characteristic amounts obtained from the color information of the pixels.

The color of the pixels can be expressed by numerical values in a color space such as YCC or HSV. Accordingly, the color average can be obtained by averaging these numerical values. Moreover, the variance indicates the extent of spread from the average value for the colors of all pixels. Here, the color average obtained from the partial image data corresponds to partial average information for color, and the variance obtained from the partial image data corresponds to partial variance information for color.

The overall characteristic amount obtaining section 52 obtains the overall characteristic amount from the data subjected to classification. This overall characteristic amount indicates an overall characteristic of the image to be classified. Examples of this overall characteristic amount are the color average and the color variance of the pixels constituting the data of the targeted image. Here, the pixels correspond to a plurality of samples constituting the data to be classified, and the color average and the color variance of the pixels correspond to the overall average information and the overall variance information for color. Other than that, the overall characteristic amount can also be a moment. This moment is a characteristic amount indicating the distribution (centroid) of color, and corresponds to moment information. The color average, color variance and the moment serving as the overall characteristic amounts are characteristic amounts that used to be directly obtained from the data of the targeted image. However, the overall characteristic amount obtaining section 52 of the present embodiment obtains these characteristic amounts using the partial characteristic amounts (this is explained later). Moreover, if the data of the targeted image has been generated by capturing an image with the digital still camera DC, then the overall characteristic amount obtaining section 52 obtains also the Exif attribute information as an overall characteristic amount. For example, image capturing information, such as aperture information indicating the aperture, shutter speed information indicating the shutter speed, and strobe information indicating whether a strobe is set or not are also obtained as overall characteristic amounts. It should be noted that the Exif attribute information corresponds to one type of appended information that is appended to the image data. In the present embodiment, the Exif attribute information that is appended at the time a picture is taken with the digital still camera is given as an example of appended information, but there is no limitation to this. For example, it may also be Exif attribute information that is appended to the image data generated by the image reading section 10 or a scanner (not shown in the figures) by executing a computer program for image processing. Moreover, the appended information is not limited to Exif attribute information, and may also be a similar kind of information.

Obtaining the Characteristic Amounts

The following is an explanation of how the characteristic amounts are obtained. As noted above, in the present embodiment, first the partial characteristic amounts are obtained from the data of the targeted image, and then the overall characteristic amounts are obtained from the obtained partial characteristic amounts. This is in order to speed up the processing. This aspect is explained in the following.

If the characteristic amounts are obtained from the data of the targeted image, then it is necessary to read in the image data from the memory card MC serving as the storage medium into the memory 37 (main memory) of the main controller 31. In this case, the access to the memory cardMC and the writing into the memory 37 needs to be carried out repeatedly, which takes a lot of time. Moreover, if the data of the targeted image is in JPEG format (such data is also referred to in short as "JPEG image data"), then it is necessary to decode this JPEG image data. For this, it is necessary to perform Huffman decoding or inverse DCT transformations, and also these processes take a lot of time.

In order to reduce the number of times the memory card MC is accessed and the number of writing operations with respect to the memory 37, it might seem to be sufficient to provide memory of the corresponding capacity, but the capacity of the memory 37 that can be installed is limited, so that this is difficult in practice. To address this problem, when the overall characteristic amounts and the partial characteristic amounts are obtained, it might seem to be possible to decode the JPEG image data into RGB image data and convert the RGB image data into YCC image data each time the overall characteristic amounts are obtained and the partial characteristic amounts are obtained. However, when this method is employed, the processing time becomes long.

In view of this situation, with the multifunctional apparatus 1 according to the present embodiment, the partial characteristic amount obtaining section 51 obtains the partial characteristic amounts for each set of partial data. Then, the obtained partial characteristic amounts are stored in the characteristic amount storage section 37e (which corresponds to a partial characteristic amount storage section) of the memory 37. The overall characteristic amount obtaining section 52 obtains the overall characteristic amounts by reading out the partial characteristic amounts stored in the characteristic amount storage section 37e. Then, the obtained overall characteristic amounts are stored in the characteristic amount storage section 37e (which corresponds to an overall characteristic amount storage section). By employing this configuration, it is possible to keep the number of transformations performed on the data of the targeted image low, and compared to a configuration in which the partial characteristic amounts and the overall characteristic amounts are obtained separately, the processing speed can be increased. Moreover, the capacity of the memory 37 for the decoding can also be kept to the necessary minimum.

Obtaining the Partial Characteristic Amounts

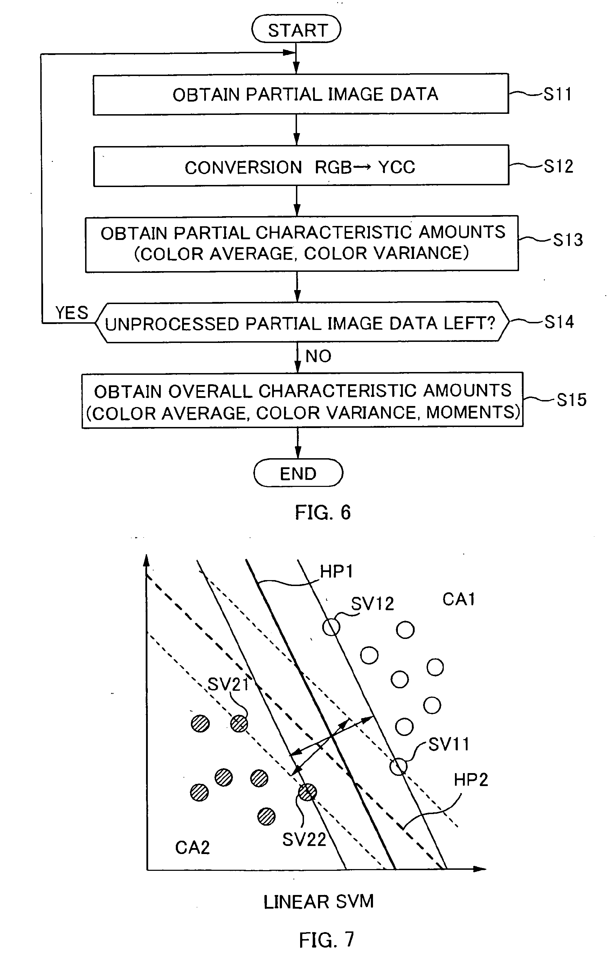

The following is an explanation of how the partial characteristic amounts are obtained by the partial characteristic amount obtaining section 51. As shown in Fig. 6, the partial characteristic amount obtaining section 51 first reads out the partial image data constituting a portion of the data of the targeted image from the image storage section 37c of the memory 37 (S11). In this embodiment, the partial characteristic amount obtaining section 51 obtains RGB image data of 1/64 of the QVGA size as partial image data. It should be noted that in the case of image data compressed to JPEG format or the like, the partial characteristic amount obtaining section 51 reads out the data for a single portion constituting the data of the targeted image from the image storage section 37c, and obtains the partial image data by decoding the data that has been read out. When the partial image data has been obtained, the partial characteristic amount obtaining section 51 performs a color space conversion (S12). For example, it converts RGB image data into YCC image data.

Then, the partial characteristic amount obtaining section 51 obtains the partial characteristic amounts (S13). In this embodiment, the partial characteristic amount obtaining section 51 obtains the color average and the color variance of the partial image data as the partial characteristic amounts. Here, the color average in the partial image data corresponds to partial average information. For convenience, the color average of the partial image data is also referred to as "partial color average". Moreover, the variance of the partial image data corresponds to partial variance information. For convenience, the variance in the partial image data is also referred to as "partial color variance". In the j-th (j = 1 ... 64) set of partial image data, the color information of the i-th (i = 1 ... 76800) pixel (for example the numerical value expressed in YCC color space) is $x_i$. In this case, the partial color average $x_{avj}$ for the j-th set of partial image data can be expressed by the following Equation (1):

$$x_{avj} = \frac{1}{n} \sum_{i=1}^{n} x_i \qquad (1)$$

Moreover, for the variance $S^2$ of the present embodiment, the variance defined in Equation (2) below is used. Therefore, the partial color variance $S_j^2$ for the j-th partial image data can be expressed by the following Equation (3), which is obtained by modifying Equation (2).

$$S^2 = \frac{1}{n-1} \sum_i (x_i - x_{av})^2 \qquad (2)$$

$$S_j^2 = \frac{1}{n-1} \left( \sum_i x_{ji}^2 - n x_{avj}^2 \right) \qquad (3)$$

Consequently, the partial characteristic amount obtaining section 51 obtains the partial color average $X_{avj}$ and the partial color variance $S_j^2$ for the corresponding partial image data by performing the calculations of Equation (1) and Equation (3). Then, the partial color average $X_{avj}$ and the partial color variance $S_j^2$ are stored in the characteristic amount storage section 37e of the memory 37.

When the partial color average $X_{avj}$ and the partial color variance $S_j^2$ have been obtained, the partial characteristic amount obtaining section 51 judges whether there is unprocessed partial image data left (S14). If the partial characteristic amounts have been obtained in order starting with the lowest numbers, then the partial characteristic amount obtaining section 51 judges that there is unprocessed partial image data left until the partial characteristic amounts have been obtained for the 64-th set of partial image data. Then, when the partial characteristic amounts have been obtained for the 64-th partial image data, it judges that there is no unprocessed partial image data left. If it judges that there is unprocessed partial image data left, then the partial characteristic amount obtaining section 51 advances to step S11 and carries out the same process (S11 - S13) for the next set of partial image data. On the other hand, if it is judged at Step S14 that there is no unprocessed partial image data left, then the processing with the partial characteristic amount obtaining section 51 ends. In this case, the overall characteristic amounts are obtained with the overall characteristic amount obtaining section 52 in Step S15.

Obtaining the Overall Characteristic Amounts

The following is an explanation of how the overall characteristic amounts are obtained with the overall characteristic amount obtaining section 52 (S15). The overall characteristic amount obtaining section 52 obtains the overall characteristic amounts'based on the plurality of partial characteristic amounts stored in the characteristic amount storage section 37e. As noted above, the overall characteristic amount obtaining section 52 obtains the color average and the color variance of the data of the targeted image as the overall characteristic amounts. These overall characteristic amounts are obtained from the data of the targeted image and correspond to characteristic amounts that are obtained from the color information of the pixels. Moreover, the color average of the data of the targeted image corresponds to overall average information. The color average of the data of the targeted image is also referred to simply as "overall color average". Moreover, the color variance of the data of the targeted image corresponds to overall variance information. The color variance of the data of the targeted image is also referred to simply as "overall color variance". Moreover, if the partial color average of the j-th set of partial image data among the 64 sets of partial image data is $x_{avj}$, then the overall color average $X_{av}$ can be expressed by the Equation (4) below. In this Equation (4), m represents the number of partial images. The overall color variance $S^2$ can be expressed by the Equation (5) below. It can be seen that with this Equation (5), it is possible to obtain the overall color variance $S^2$ from the partial color averages $X_{avj}$, the partial color variances $S_j^2$, and the overall color average $X_{av}$.

$$x_{av} = \frac{1}{m} \sum_{j} x_{avj} \qquad (4)$$

$$S^2 = \frac{1}{N-1} \left( \sum_{i=1}^{N} x_{ji}^{2} - N x_{av}^{2} \right) = \frac{1}{N-1} \left( (n-1) \sum_{j=1}^{m} S_{j}^{2} + n \sum_{j=1}^{m} x_{avj}^{2} - N x_{av}^{'2} \right) \qquad (5)$$

Consequently, the overall characteristic amount obtaining section 52 obtains the overall color average $x_{av}$ and the overall color variance ) $S^2$ for the data of the targeted image by calculating the Equations (4) and (5). Then, the overall color average $X_{av}$ and the overall color variance $S^2$ are stored in the characteristic amount storage section 37e of the memory 37.

The overall characteristic amount obtaining section 52 obtains the moment as another overall characteristic amount. In this embodiment, an image is to be classified, so that the positional distribution of colors can be quantitatively obtained through the moment. In this embodiment, the overall characteristic amount obtaining section 52 obtains the moment from the color average $X_{avj}$ for each set of partial image data. Here, when the partial image data constituting the data of the targeted image is expressed as a matrix of horizontally I (I=1 .. 8) and vertically J (J = 1 ... 8) and the partial color averages of the partial image data specified by I and J are expressed as $X_{av}$ (I, J), then the n-th moment $m_{nh}$ in horizontal direction for the partial color average can be expressed as in Equation (6) below.

$$m_{nh} = \sum_{I,J} I^{n} \times X_{av}(I,J) \qquad (6)$$

Here, the value obtained by dividing the simple primary moment by ) the sum total of the partial color averages $X_{av}(I, J)$ is referred to as "primary centroid moment". This primary centroid moment is as shown in Equation (7) below and indicates the centroid position in horizontal direction of the partial characteristic amount of partial color average. The n-th centroidmoment, which is a generalization of this centroidmoment is as expressed by Equation (8) below. Among the n-th centroid moments, the odd-numbered (n = 1, 3 ...) centroid moments generally seem to indicate the centroid position. The even-numbered centroid moments generally seem to indicate the extent of the spread of the characteristic amounts near the centroid position.

$$m_{glh} = \sum_{I,J} I \times X_{av}(I,J) \Big/ \sum_{I,J} X_{av}(I,J) \qquad (7)$$

$$m_{gnh} = \sum_{I,J} (I - m_{glx})^{n} \times X_{av}(I,J) \Big/ \sum_{I,J} X_{av}(I,J) \qquad (8)$$

The overall characteristic amount obtaining section 52 of this embodiment obtains six types of moments. More specifically, it obtains the primary moment in a horizontal direction, the primary moment in a vertical direction, the primary centroid moment in a horizontal direction, the primary centroid moment in a vertical direction, the secondary centroid moment in a horizontal direction, and the secondary centroid moment in a vertical direction. It should be noted that the combination of moments is not limited to this. For example, it is also possible to use eight types, adding the secondary moment in a horizontal direction and the secondary moment in a vertical direction.

By obtaining these moments, it is possible to recognize the color centroid and the extent of the spread of color near the centroid. For example, information such as "a red region spreads at the top portion of the image" or "a yellow region is concentrated near the center" can be obtained. With the classification process of the classification processing section 30I (see Fig. 4), the centroid position and the localization of colors can be taken into account, so that the accuracy of the classification can be improved.

Normalization of the Characteristic Amounts

The overall classifier 30F and the partial image classifier 30G constituting a part of the classification processing section 30I perform the classification using support vector machines (also written "SVM"), which are explained later. These support vector machines have the property that their influence (extent of weighting) on the classification increases the larger the variance of the characteristic amounts is. Accordingly, the partial characteristic amount obtaining section 51 and the overall characteristic amount obtaining section 52 perform a normalization on the obtained partial characteristic amounts and the overall characteristic amounts. That is to say, the average and the variance is calculated for each characteristic amount, and normalized such that the average becomes "0" and the variance become "1". More specifically, when $\mu_i$ is the average value and $\sigma_i$ is the variance for the i-th characteristic amount $x_i$, then the normalized characteristic amount $x_i'$ can be expressed by the Equation (9) below.

$$x_i' = \left(x_i - \mu_i\right)/\sigma_i \qquad (9)$$

Consequently, the partial characteristic amount obtaining section 51 and the overall characteristic amount obtaining section 52 normalize each characteristic amount by performing the calculation of Equation (9) . The normalized characteristic amounts are stored in the characteristic amount storage section 37e of the memory 37, and used for the classification process with the classification processing section 30I. Thus, in the classification process with the classification processing section 30I, each characteristic amount can be treated with equal weight. As a result, the classification accuracy can be improved.

Summary of Characteristic Amount Obtaining Section 30E

As explained above, when the characteristic amounts used for classification are obtained with the characteristic amount obtaining section 30E of this embodiment, the partial characteristic amounts are obtained first based on partial image data, and then the overall characteristic amounts are obtained based on the plurality of partial characteristic amounts. Therefore, the processing performed when obtaining the overall characteristic amounts is simplified and a speed-up of the processing is achieved. For example, it is possible to suppress the number of times the data of the targeted image is read out from the memory 37 to the necessary minimum. And as far as the conversion of image data is concerned, the conversion of partial image data is performed during the obtaining of the partial characteristic amounts, so that no conversion needs to be performed during the obtaining of the overall characteristic amounts. Also with regard to this aspect, a speed-up of the processing is achieved. In this case, the partial characteristic amount obtaining section 51 obtains the partial characteristic amounts based on the partial image data corresponding to portions obtained by dividing the targeted image into a grid shape. With this configuration, it is possible to specify the partial image data by specifying two pixels (coordinates) located on a diagonal line. Accordingly, the processing is simplified and a speed-up is achieved.
Moreover, the partial characteristic amount obtaining section 51 obtains partial color averages and partial color variances as the partial characteristic amounts, whereas the overall characteristic amount obtaining section 52 obtains overall averages and overall color variances as the overall characteristic amounts. These characteristic amounts are used for the process of classifying the targeted image with the classification processing section 30I. Therefore, the classification accuracy of the classification processing section 30I can be increased. This is because in the classification process, information about the coloring and information about the localization of colors is taken into account, which is obtained for the overall targeted image as well as for the partial images.
The overall characteristic amount obtaining section 52 obtains, as the overall characteristic amounts, the moments of a plurality of pixels constituting the data of the targeted image. With these moments, it is possible to let the overall classifier 30F recognize the position of the centroid of a color and the extent of spread of a color. As a result, it is possible to increase the accuracy with which the targeted image is classified. Furthermore, the overall characteristic process obtaining section 52 uses the partial characteristic amounts to obtain the moments. Thus, the moments can be obtained efficiently, and a speed-up of the processing is achieved.

Classification Processing Section 30I

The following is an explanation of the classification processing section 30I. First, an overview of the classification processing section 30I is explained. As shown in Figs. 4 and 5, the classification processing section 30I includes an overall classifier 30F, a partial image classifier 30G, and a consolidated classifier 30H. The overall classifier 30F classifies the scene of the targeted image based on the overall characteristic amounts. The partial image classifier 30G classifies the scene of the targeted image based on the partial characteristic amounts. The consolidated classifier 30H classifies the scene of targeted images whose scene could be determined neither with the overall classifier 30F nor with the partial image classifier 30G. Thus, the classification processing section 30I includes a plurality of classifiers with different properties. This is in order to improve the classification properties. That is to say, scenes whose characteristics tend to appear in the overall targeted image can be classified with high accuracy with the overall classifier 30F. By contrast, scenes whose characteristics tend to appear in a portion of the targeted image can be classified with high accuracy with the partial image classifier 30G. As a result, it is possible to improve the classification properties of the targeted image. Furthermore, for images where the scene could be determined neither with the overall classifier 30F nor with the partial image classifier 30G, the scene can be classified with the consolidated classifier 30H. Also with regard to this aspect, it is possible to improve the classification properties of the targeted image.

Overall Classifier 30F

The overall classifier 30F includes sub-classifiers (also referred to simply as "overall sub-classifiers"), which correspond in number to the number of scenes that can be classified. The overall sub-classifiers classify whether a targeted image belongs to a specific scene based on the overall characteristic amounts. As shown in Fig. 5, the overall classifier 30F includes, as overall sub-classifiers, a landscape scene classifier 61, an evening scene classifier 62, a night scene classifier 63, a flower scene classifier 64, and an autumnal scene classifier 65. The landscape scene classifier 61 classifies whether the targeted image belongs to a landscape scene. The evening scene classifier 62 classifies whether the targeted image belongs to an evening scene. The night scene classifier 63 classifies whether the targeted image belongs to a night scene. The flower scene classifier 64 classifies whether the targeted image belongs to a flower scene. The autumnal scene classifier 65 classifies whether the targeted image belongs to an autumnal scene. Furthermore, the various overall sub-classifiers classify also that a targeted image does not belong to a specific scene. If it has been determined with the various overall sub-classifiers that the targeted image belongs to a given scene, a positive flag is set in a corresponding region of the positive flag storage section 37h. And if it has been determined with the various overall sub-classifiers that the targeted image does not belong to a given scene, a negative flag is set in a corresponding region of the negative flag storage section 37i.

The overall classifier 30F carries out the classification with the various overall sub-classifiers in a predetermined order. To explain this in more detail, the overall classifier 30F first classifies with the landscape scene classifier 61 whether the targeted image belongs to a landscape scene. Then, if it has been determined that it does not belong to a landscape scene, it classifies with the evening scene classifier 62 whether the targeted image belongs to an evening scene. After this, the classification with the night scene classifier 63, the flower scene classifier 64 and the autumnal scene classifier 65 are carried out in that order. That is to say, if the overall classifier 30F could not classify that the targeted image belongs to a corresponding specific scene (a first category) with a given overall sub-classifier (first overall sub-classifier), then it classifies whether the targeted image belongs to another specific scene (second category) with another overall sub-classifier (second overall sub-classifier). Thus, the overall classifier 30F lets the individual overall sub-classifiers carry out the classification of the targeted image in order, so that the reliability of the classification can be increased.

These overall sub-classifiers each include a support vector machine and a decision section. That is to say, the landscape scene classifier 61 includes a landscape scene support vector machine 61a and a landscape scene decision section 61b, whereas the evening scene classifier 62 includes an evening scene support vector machine 62a and an evening scene decision section 62b. The night scene classifier 63 includes a night scene support vector machine 63a and a night scene decision section 63b, the flower scene classifier 64 includes a flower scene support vector machine 64a and a flower scene decision section 64b, and the autumnal scene classifier 65 includes an autumnal scene support vector machine 65a and an autumnal scene decision section 65b.

The Support Vector Machines

The following is an explanation of the support vector machines (landscape scene support vector machine 61a to autumnal scene support vector machine 65a). The support vector machines correspond to probability information obtaining sections and obtain probability information indicating whether the probability that the object to be classified belongs to a certain category is large or small, based on the characteristic amounts indicating the characteristics of the image to be classified. Here, probability information is information that is associated with the probability that an image belongs to a given category. That is to say, if the value of the probability information is determined, the probability whether an object to be classified belongs to a certain category is determined in accordance with that value. In this embodiment, the output value (classification function value) of the support vector machines corresponds to the probability information.

The basic form of the support vector machines is that of linear support vector machines. As shown in Fig. 7 for example, a linear support vector machine implements a linear classification function that is determined by sorting training with two classes, this classification function being determined such that the margin (that is to say, the region for which there are no support vectors in the training data) becomes maximal. In Fig. 7, the white circles are support vectors belonging to a certain category CA1, and the hatched circles are support vectors belonging to another category CA2. At the separating hyperplane that separates the support vectors belonging to category CA1 from the support vectors belonging to category CA2, the classification function determining this separation hyperplane has the value "0". A variety of such separation hyperplanes can be determined, but in linear support vector machines, the classification function is determined such that the distance from given support vectors belonging to the category CA1 to the separation hyperplane and the distance of certain support vectors belonging to the category CA2 to the separation hyperplane becomes maximal. Fig. 7 shows a separation hyperplane HP1 that is parallel to the straight line through the support vectors SV11 and SV12 belonging to category CA1 and a separation hyperplane HP2 that is parallel to the straight line through the support vectors SV21 and SV22 belonging to category CA2 as candidates for the separation hyperplane achieving the maximum margin. In this example, the margin of the separation hyperplane HP1 is larger than that of the separation hyperplane HP2, so that a classification function corresponding to the separation hyperplane HP1 is determined as the linear support vector machine.

Now, linear support vector machines can classify samples that can be linearly separated with high accuracy, but their classification accuracy for images to be classified that cannot be linearly separated is low. It should be noted that the targeted images that are handled by the multifunctional apparatus 1 correspond to objects to be classified that cannot be linearly separated. Accordingly, for such an object to be classified, the characteristic amounts are converted non-linearly (that is, mapped to a higher-dimensional space), and a non-linear support vector machine performing linear classification in this space is used. With such a non-linear support vector machine, a new function that is defined by a suitable number of non-linear functions is taken as data for the linear support vector machines. With such non-linear support vector machines, a linear classification is carried out in a higher-dimensional space, so that also samples that are classified by the non-linear function can be classified with high accuracy. Moreover, non-linear support vector machines use kernel functions. By using kernel functions, it is possible to determine relatively easily the classification function by a kernel calculation, even without performing complicated calculations in higher-dimensional space.

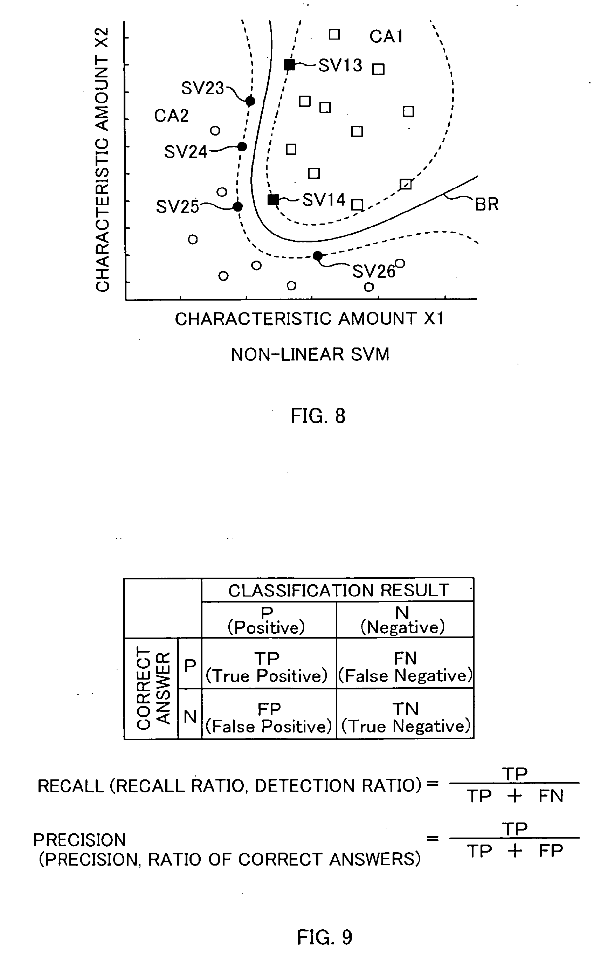

As shown diagrammatically in Fig. 8, in a non-linear support vector machine, the classification border BR becomes curved. In this example, the points represented by squares are support vectors belonging to the category CA1, whereas the points represented by circles are support vectors belonging to the category CA2. The training (classification training) used for these support vectors is determined by the parameters of the classification function. Of the support vectors used for the training, a subset of support vectors that is close to the classification border BR is used for the classification. In the example of Fig. 8, of the plurality of support vectors belonging to the category CA1, the support vectors SV13 and SV14 represented by black squares are used for the classification. Similarly, of the plurality of support vectors belonging to the category CA2, the support vectors SV23 to SV26 represented by black circles are used for the classification. It should be noted that the other support vectors indicated by white squares and white circles are used for the training, but not to the extent that they affect the optimization. Therefore, the volume of the training data (support vectors) used during the classification can be reduced by using support vector machines for the classification. As a result, it is possible to improve the accuracy of the obtained probability information even with limited training data. That is to say, a decrease of the amount of data and a speed-up of the processing is achieved.

In this embodiment, the overall characteristic amounts are assigned to characteristic amount X1 and characteristic amount X2, as shown in Fig. 8. For example, if the characteristic amount X1 is the overall color average and the characteristic amount X2 is the overall color variance, the numerical value indicating the overall color average is taken as the characteristic amount X1 and the numerical value indicating the overall color variance is taken as the characteristic amount X2. In the present embodiment, the overall color average is a continuous value represented in YCC color space. Moreover, the overall color variance is a continuous value that is obtained by above-noted Equation (5). Similarly, also the Exif attribute information can be taken as the overall characteristic amount. For example, information on the shutter speed can be taken as the characteristic amount X1 and strobe-light information can be taken as the characteristic amount X2. In Exif Version 2.1, a unit system called "APEX" (Additive System of Photographic Exposure) is used for the shutter speed information. In this unit system, numeric values corresponding to respective shutter speeds are used, for example the value "4" corresponds to 1/15 sec and the value "7" corresponds to 1/125 sec. Moreover, the strobe-light information is given as a discrete value, with a value (for example the value "1") indicating strobe emission and a value (for example the value "0") indicating no strobe emission. Based on these characteristic amounts X1 and X2, the support vector machine decides whether the image serving as the object to be classified belongs to category CA1 (for example, the category of landscape scenes) or to another category CA2 (for example, a category other than landscape scenes).

The overall sub-classifiers (landscape scene classifier 61 to autumnal scene classifier 65) each include such a non-linear support vector machine (that is, a classification function). In each of the support vector machines (landscape scene support vector machine 61a to autumnal scene support vector machine 65a), the parameters in the classification function are determined by training based on different support vectors. As a result, the properties of each of the overall sub-classifiers can be optimized, and it is possible to improve the classification properties of the overall classifier 30F. Each of the support vector machines outputs a numerical value, that is, a classification function value, which depends on the entered sample (image data). This classification function value indicates the degree (probability) to which the entered sample belongs to a certain category. To explain this with the example of Fig. 8, the more characteristics the entered sample has in common with category CA1, or in other words, the higher the probability is that it belongs to category CA1, the larger is the positive value that is taken on by the classification function value. Conversely, the more characteristics the entered sample has in common with category CA2, the larger is the negative value that is taken on by the classification function value. Moreover, if the entered sample evenly shares characteristics of category CA1 and characteristics of category CA2, the value "0" is calculated as the classification function value. Thus, each time a sample is entered, the support vector machines calculate a classification function value depending on the extent to which the sample to be classified belongs to a specific category (predetermined category). Consequently, this classification function value corresponds to probability information. Moreover, the probability information determined by the support vector machines is stored in the probability information storage section 37f of the memory 37.

The Decision Sections

The following is an explanation of the decision sections (landscape scene decision section 61b to autumnal scene decision section 65b) . Based on the classification function values (probability information) obtained with the support vector machines, these decision sections decide whether the targeted image belongs to a corresponding scene. Each decision section makes a decision based on the above-mentioned probability threshold. That is to say, each decision section decides that the targeted image belongs to a corresponding scene, if the probability based on the classification function value obtained by the corresponding support vector machine is equal to or greater than a probability that is prescribed by the probability threshold. The reason why the decision is made with such a probability threshold is in order to increase the speed of the processing while maintaining the accuracy of the decision. If the sorting of a scene is carried out using probabilities, ordinarily the probability that an image belongs to a scene is obtained for all possible scenes, and the image is sorted according to which of these probabilities is highest. With this method, it is necessary to obtain the probabilities for all scenes, so that the processing amount becomes large and the processing tends to become slow. With regard to this aspect, the decision sections of this embodiment can decide whether a targeted image is sorted as a specific scene based on the probability information for that specific scene, so that a simplification of the processing is achieved. That is to say, it is possible to process this with a simple comparison of the classification function value (probability information) and the probability threshold. Moreover, it is possible to set the extent of wrong decisions in accordance with the setting of the probability thresholds, so that the balance between the processing speed and the decision accuracy can be easily adjusted.

As a measure indicating the accuracy of the decisions made by the decision sections, the recall ratio and the precision (ratio of the correct answers) are used, as shown in Fig. 9. Here, the recall ratio is the proportion of images determined as belonging to a certain scene to the targeted images that must be determined to belong to a certain scene. That is to say, it is the proportion of the number of images determined to belong to a specific scene to the total number of images of that specific scene handled by that decision section. To give a specific example, if a plurality of images belonging to the landscape scene category is classified with the landscape scene classifier 61, it corresponds to the proportion of images that are actually classified as belonging to the landscape scene category. Consequently, the recall ratio can be increased by ensuring that also samples for which the probability that they belong to that scene is somewhat low are determined as belonging to that category. The precision indicates the proportion of images for which a correct decision is made, among the images that have been decided by that decision section to belong to the corresponding scene category. That is to say, it is the proportion of the number of images for which the correct decision is made to the total number of images for which the decision section has decided that they belong to the scene handled by it. To give a specific example, it corresponds to the proportion of targeted images that actually belong to the landscape scene category among the plurality of targeted images that are classified by the landscape scene classifier 61 as belonging to the landscape scene. Consequently, the precision can be increased by ensuring that samples having a high probability of belonging to a scene category are selectively determined to belong to that scene category.

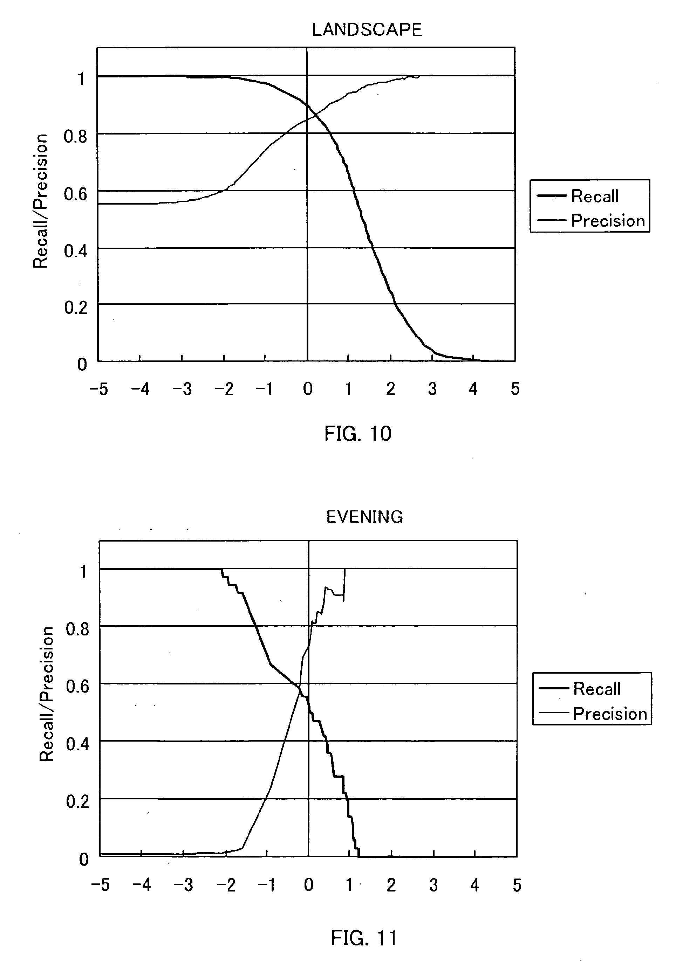

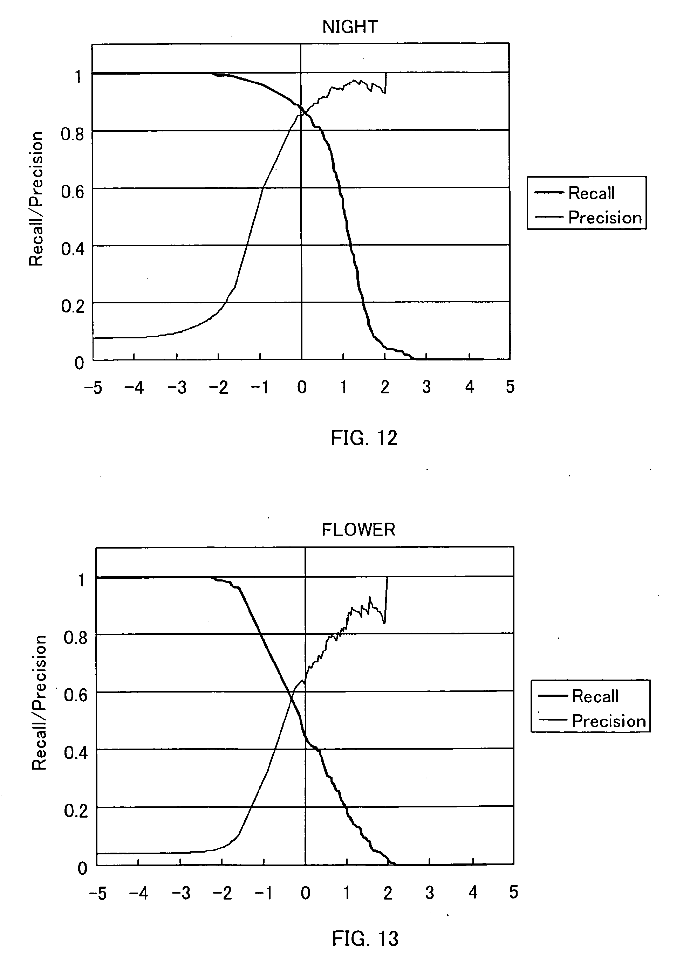

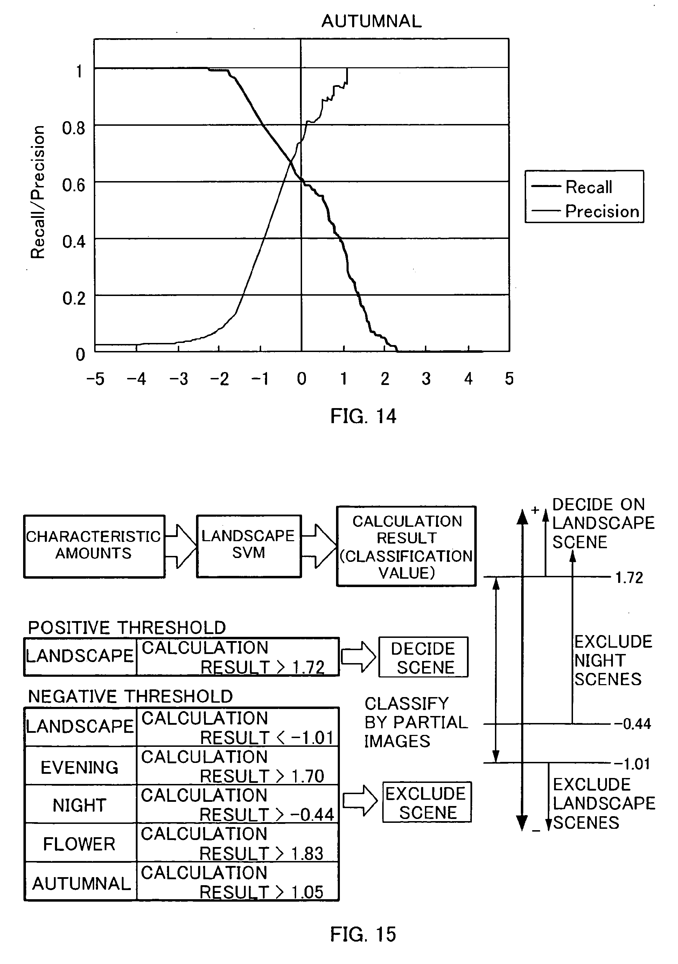

Figs. 10 to 14 are graphs showing the relation between the classification function values obtained with the various overall sub-classifiers (the calculation results of the overall sub-classifiers) and the recall ratio, as well as the relation between the classification function values and the precision. In these figures, Fig. 10 shows the relations for the landscape scene classifier 61, and Fig. 11 shows the relations for the evening scene classifier 62. Similarly, Fig. 12 shows the relations for the night scene classifier 63, Fig. 13 shows the relations for the flower scene classifier 64, and Fig. 14 shows the relations for the autumnal scene classifier 65. In these figures, the horizontal axis marks the classification function value obtained by the support vector machine including the various overall sub-classifiers, and the vertical axis marks the recall ratio and the precision. It will be understood from these figures that the recall ratio and the precision are in an inverse relationship to each other. As mentioned above, in order to increase the recall ratio, it should be ensured that a targeted image (sample) is classified as belonging to a certain scene, even when the probability that it belongs to that scene is somewhat low. However, in this case, the possibility increases that also targeted images that do not belong to that scene are classified as belonging to that scene. As a result, the precision drops. Conversely, to increase the precision, it should be ensured that targeted images which have a high probability of belonging to that scene category are selectively classified as belonging to that scene. However, in this case, the possibility increases that also targeted images that belong to that scene are classified as not belonging to that scene. As a result, the recall ratio drops.

The Probability Threshold

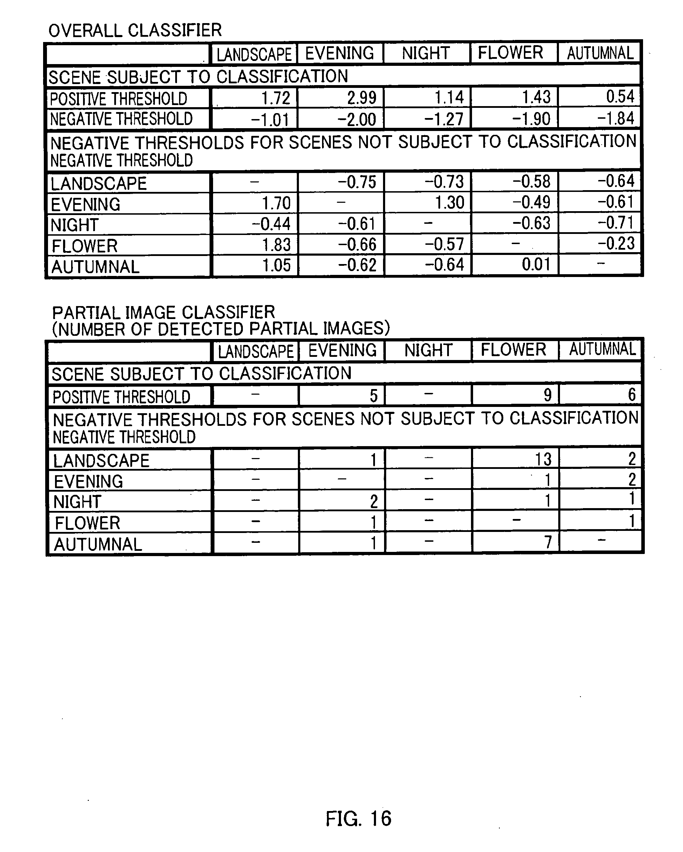

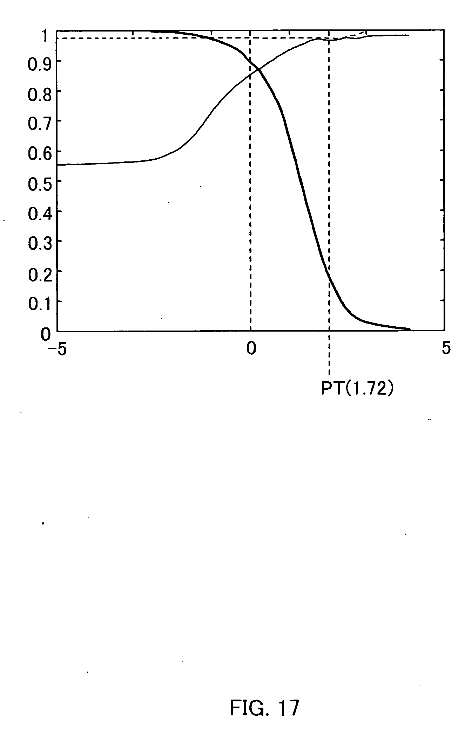

The probability threshold of the overall classifier 30F is determined taking the precision (ratio of the correct answers) as the standard. This is because, even though there may be some false results, a classification is performed afterwards by the partial image classifier 30G and by the consolidated classifier 30H. Therefore, with the overall classifier 30F, the emphasis is placed on reliability, and targeted images belonging to the respective scene category are selectively classified. However, if the reliability is set too high, the number of targeted images for which the scene can be determined by the overall classifier 30F becomes very low. Accordingly, almost all targeted images are classified by the classifiers of the later stages, and a lot of time will be necessary for the processing. Consequently, the probability threshold is determined such that the reliability and the processing time are balanced. For example, as shown in Figs. 15 and 16, if the probability threshold for the landscape scene classifier 61 is set to the value "1.72", and the classification function value obtained by the landscape scene support vector machine 61a is a value that is larger than the value "1.72", then the targeted image is determined to be a landscape scene. As shown in Fig. 17, by setting the probability threshold to the value "1.72" the precision becomes about "0.97". Consequently, if the probability that the image is a landscape scene is in the range from "0.97" to "1.00", then the targeted image is classified (determined) to be a landscape scene. Such a probability threshold gives a positive decision that the targeted image belongs to the scene (category) handled by the overall sub-classifier. Consequently, in the following explanations, this probability threshold for making such a positive decision is also referred to as "positive threshold".

As can be seen by comparing Figs. 10 to 14, the relation between the classification function value and the recall value as well as the relation between the classification function value and the precision differ depending on the corresponding overall sub-classifier. And even for the same type of overall sub-classifier, it differs depending on the training data (the support vectors for the training). Moreover, the positive threshold is set in accordance with the type of overall sub-classifier, the training data and the possibility range for determining a scene (category). As shown in Fig. 16, the positive threshold in this embodiment is "2.99" for the evening scene classifier 62, "1.14" for the night scene classifier 63, "1.43" for the flower scene classifier 64, and "0.54" for the autumnal scene classifier 65.

As noted above, the classification function values (calculation results) obtained with the various support vector machines correspond to the probability information, which indicates whether the probability that an image belongs to that scene is large or small, as described above. That the probability that an image belongs to that scene is small means that the probability is large that it does not belong to that scene. Consequently, it is possible to classify based on the classification function value obtained with a support vector machine that an image does not belong to that scene. For example, if the classification function value obtained with a support vector machine is a value that is smaller than a probability threshold for classifying that the image does not belong to that category, then it can be classified that the targeted image does not belong to that scene. Such a probability threshold enables the negative decision that the targeted image does not belong to the scene handled by that overall sub-classifier. Consequently, in the following explanations, a probability threshold for enabling such a negative decision is also referred to as "negative threshold". If it can be classified that the targeted image does not belong to a certain scene, then the classifiers of the later stages do not need to carry out a classification for the same scene, so that the processing is simplified and sped up.

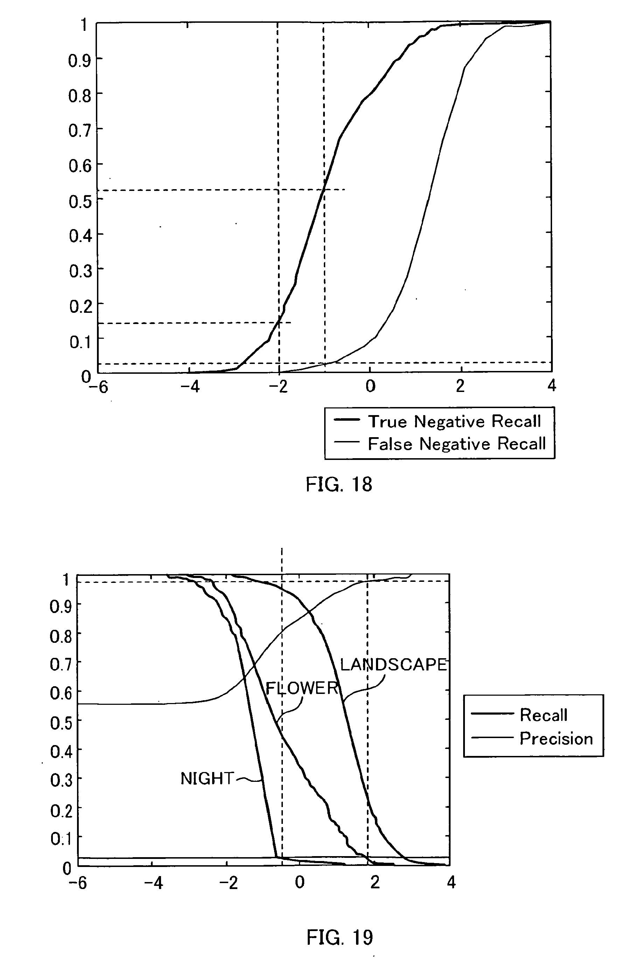

Fig. 18 shows an example of the recall ratio of images that have been correctly excluded as not being landscape scenes (true negative recall ratio) and the recall ratio of landscape images that have been falsely excluded (false negative recall ratio) by the landscape scene classifier 61. In the example of Fig. 18, the negative threshold is set to "-2". In this case, the recall ratio of images that are falsely excluded is almost "0". Therefore, the probability that a landscape image is falsely excluded is virtually zero. However, the recall ratio of images that are correctly excluded is about "0.13". Therefore, only about 13% of the images other than landscape images can be excluded. Let us now consider the case that the negative threshold is set to "-1". In this case, the recall ratio of falsely excluded images is about "0.03". Therefore, the probability that a landscape image is falsely excluded is kept at about 3%. On the other hand, the recall ratio of correctly excluded images is about "0.53". Therefore, about 53% of the images other than landscape images can be excluded. Thus, the negative threshold is set with consideration to the probability with which a targeted image belonging to that scene category is falsely excluded and the probability with which a targeted image not belonging to that scene is correctly excluded. As shown in Fig. 16, the negative threshold in this embodiment is "-1.01" for the landscape scene classifier 61, "-2.00" for the evening scene classifier 62, "-1.27" for the night scene classifier 63, "-1.90" for the flower scene classifier 64, and "-1.84" for the autumnal scene classifier 65.

The above-explained negative threshold is a probability threshold with which a certain overall sub-classifier decides that an object to be classified does not belong to the category handled by that overall sub-classifier. Here, let us consider the case that there are a plurality of categories whose characteristics differ considerably. In this case, the characteristics differ considerably, so that if the probability is high that an image belongs to a certain category, then the probability that it belongs to another category tends to be small. For example, let us consider the case of a landscape scene and a night scene. The landscape image, which belongs to the landscape scene category, has the basic color tones green and blue, whereas the night image, which belongs to the evening scene category, has the basic color tone black. Therefore, for images having the basic color tones green and blue, the probability that they belong to the landscape scene will be high, whereas the probability that they belong to the night scene will be low. And for images having the basic color tone black, the probability that they belong to the night scene will be high, whereas the probability that they belong to the landscape scene will be low. Accordingly, it can be seen that based on the classification function value obtained with a support vector machine, it is possible to classify that a targeted image does not belongs to a scene other than the scene handled by that overall sub-classifier. For example, if the classification function value obtained with a support vector machine is larger than the probability threshold for classifying that a targeted image does not belong to another scene, it can be classified that the targeted image does not belong to another scene. Such a probability threshold enables the negative decision that a targeted image does not belong to a scene other than the scene handled by that overall sub-classifier, that is, to another scene category handled by another overall sub-classifier. Consequently, in the following explanations, the probability threshold for enabling such a negative decision is also referred to as "other negative threshold" (other probability threshold) .

The example of Fig. 19 shows the recall ratio according to the landscape scene support vector machine 61a for the case that the image has been decided to belong to the landscape scene category, the recall ratio for the case that the image has been decided to belong to the flower scene category, and the recall ratio for the case that the image has been decided to belong to the night scene category. For example, for night scenes, the value "-0.5" is set as the other negative threshold, and if the classification function value obtained with the landscape scene support vector machine 61a is larger than this other threshold value, then the targeted image is classified as not belonging to the night scene category. In this case, the corresponding recall ratio is about "0.03". Consequently, the probability that a night image is erroneously classified as not being a night scene is kept at about 3%. On the other hand, a targeted image whose classification function value obtained with the landscape scene support vector machine 61a is larger than "-0.5" can be classified as not belonging to the night scene category. As a result, the processing with the night scene classifier 63 can be omitted, and the classification process can be sped up. It should be noted that with the overall classifier 30F, in the landscape scene classifier 61, the negative threshold for evening scenes is set to "1.70", the negative threshold for night scenes is set to "-0.44", the negative threshold for flower scenes is set to "1.83", and the negative threshold for autumnal scenes is set to "1.05", as shown in Fig. 15. Thus, if the classification function value obtained with the landscape scene support vector machine 61a is larger than "-0.44" but not greater than "1.72", then a landscape scene cannot be determined, but it is classified that it is not a night scene. And if the classification function value obtained with the landscape scene support vector machine 61a is larger than "1.05" but not greater than "1.72", then a landscape scene cannot be determined, but it is classified that it is neither an autumnal scene nor a night scene. Similarly, if the classification function value obtained with the landscape scene support vector machine 61a is larger than "1.70" but not greater than "1.72", then a landscape scene cannot be determined, but it can be classified that it is neither an evening scene, an autumnal scene nor a night scene.

Such negative thresholds are likewise set also with respect to the other overall sub-classifiers. For example, as shown in Fig. 16, in the evening scene classifier 62, the negative threshold for landscape scenes is set to the value "-0.75", the negative threshold for night scenes is set to the value "-0.61", the negative threshold for flower scenes is set to the value "-0.66", and the negative threshold for autumnal scenes is set to the value "-0.62". Moreover, in the night scene classifier 63, the negative threshold for landscape scenes is set to the value "-0.73", the negative threshold for evening scenes is set to the value "1.30", the negative threshold for flower scenes is set to the value "-0.57", and the negative threshold for autumnal scenes is set to the value "-0. 64". While detailed explanations are omitted, also in the flower scene classifier 64 -and the autumnal scene classifier 65, other negative thresholds are set in a similar manner. As a result, based on the classification function value obtained with the support vector machines of a given overall sub-classifier, it is possible to perform a classification with regard to other scenes (categories), so that the processing can be made more efficient. It should be noted that the processing flow for the overall classifier 30F is explained further below.

Partial Image Classifier 30G

The partial image classifier 30G includes several sub-classifiers (also referred to below simply as "partial sub-classifiers"), corresponding in number to the number of scenes that can be classified. The partial sub-classifiers classify, based on the partial characteristic amounts, whether a targeted image belongs to a specific scene category. That is to say, they perform a classification based on the characteristics of each partial image (the characteristics of each portion of the image). The partial sub-classifiers also classify that the targeted image does not belong to a specific scene. If the partial sub-classifiers have ascertained that the targeted image belongs to a certain scene, then a positive flag is stored in the corresponding region of the positive flag storage section 37h. And if the partial sub-classifiers have ascertained that the targeted image does not'belong to a certain scene, then a negative flag is stored in the corresponding region of the negative flag storage section 37i.

It should be noted that in the partial image classifier 30G of the present embodiment, the partial sub-classifiers also use the overall characteristic amounts in addition to the partial characteristic amounts when obtaining the classification function value. That is to say, when classifying a partial image, the partial sub-classifiers also take into account the overall characteristics of the targeted image, in addition to the characteristics of the partial images. This is in order to increase the classification accuracy of the partial images (this is explained further below).

As shown in Fig. 5, the partial image classifier 30G includes, as partial sub-classifiers, an evening scene partial classifier 71, a flower scene partial classifier 72, and an autumnal scene partial classifier 73. The evening scene partial classifier 71 classifies whether the targeted image belongs to the evening scene category. The flower scene partial classifier 72 classifies whether the targeted image belongs to the flower scene category. The autumnal scene partial classifier 73 classifies whether the targeted image belongs to the autumnal scene category. Comparing the number of scene types that can be classified by the overall classifier 30F with the number of scene types that can be classified by the partial image classifier 30G, the number of scene types that can be classified by the partial image classifier 30G is smaller. This is because the partial image classifier 30G has the purpose of supplementing the overall classifier 30F. The partial image classifier 30G mainly performs the classification of images that are difficult to classify accurately with the overall classifier 30F. Therefore, no partial sub-classifiers are provided for classification objects for which a sufficient accuracy can be attained with the overall classifier 30F. By employing this configuration, the configuration of the partial image classifier 30G can be simplified. Here, the partial image classifier 30G is configured by the main controller 31, so that a simplification of its configuration means that the size of the operating program executed by the CPU 36 and/or the volume of the necessary data is reduced. Through a simplification of the configuration, the necessary memory capacity can be reduced and the processing can be sped up. Moreover, comparing the overall sub-classifiers with the partial sub-classifiers, the partial sub-classifiers tend to have a larger processing amount. This is due to the fact that they perform a classification for each of a plurality of partial images. In the partial image classifier 30G, the number of types of partial sub-classifiers is smaller than the number of types of overall sub-classifiers, so that it is possible to carry out the processing more efficiently.

Next, the images suitable for classification with the partial image classifier 30G are considered. First of all, a flower scene and an autumnal scene are considered. In both of these scenes, the characteristics of the scene tend to appear locally. For example, in an image of a flowerbed or a flower field, a plurality of flowers tend to accumulate in a specific portion of the image. In this case, the characteristics of a flower scene appear in the portion where the plurality of flowers accumulate, whereas characteristics that are close to a landscape scene appear in the other portions. This is the same for autumnal scenes. That is to say, if autumn leaves on a portion of a hillside are captured, then the autumn leaves accumulate on a specific portion of the image. Also in this case, the characteristics of an autumnal scene appear in one portion of the hillside, whereas the characteristics of a landscape scene appear in the other portions. Consequently, by using the flower scene partial classifier 72 and the autumnal scene partial classifier 73 as partial sub-classifiers, the classification properties can be improved even for flower scenes and for autumnal scenes, which are difficult to classify with the overall classifier 30F. That is to say, the classification is carried out for each partial image, so that even if it is an image in which the characteristics of the essential object, such as flowers or autumnal leaves, appear only in a portion of the image, it is possible to increase the ratio at which the essential object is present within the partial image. As a result, the classification can be performed with high accuracy. Next, evening scenes are considered. Also in evening scenes, the characteristics of the evening scene may appear locally. For example, let us consider an image in which the evening sun is captured as it sets at the horizon, and the image is captured immediately prior to the complete setting of the sun. In this image, the characteristics of a sunset scene appear at the portion where the evening sun sets, whereas the characteristics of a night scene appear in the other portions. Consequently, by using the evening scene partial classifier 71 as the partial sub-classifier, the classification properties can be improved even for evening scenes that are difficult to classify with the overall classifier 30F.

In the partial image classifier 30G, the classification with the partial sub-classifiers is carried out successively one by one, like the classification with the overall sub-classifiers. With this partial image classifier 30G, it is first classified with the evening scene partial classifier 71 whether the targeted image belongs to an evening scene. Then, if it is determined that it does not belong to an evening scene, it is classified with the flower scene partial classifier 72 whether the targeted image belongs to a flower scene. Furthermore, if it is determined that it does not belong to a flower scene, it is classified with the autumnal scene partial classifier 73 whether the targeted image belongs to an autumnal scene. That is to say, if a given partial sub-classifier (first partial sub-classifier) has not classified the targeted image as belonging to the corresponding specific scene (first category), then the partial image classifier 30G classifies with another partial sub-classifier (second partial sub-classifier) whether the targeted image belongs to another specific scene (second category). Thus, it is possible to increase the classification reliability, since the configuration is such that the classification is carried out with each partial sub-classifier individually.

The partial sub-classifiers each include a partial support vector machine and a detection number counter. That is to say, the evening scene partial classifier 71 includes an evening scene partial support vector machine 71a and an evening scene detection number counter 71b, the flower scene partial classifier 72 includes a flower scene partial support vector machine 72a and a flower scene detection number counter 72b, and the autumnal scene partial classifier 73 includes an autumnal scene partial support vector machine 73a and an autumnal scene detection number counter 73b.

The partial support vector machines (evening scene partial support vector machine 71a to autumnal scene partial support vector machine 73a) are similar to the support vector machines (landscape scene support vector machine 61a to autumnal scene support vector machines 65a) of the overall sub-classifiers. The partial support vector machines differ from the support vector machines of the overall sub-classifier with regard to the fact that their training data is partial data. Consequently, the partial support vector machines carry out a calculation based on the partial characteristic amounts indicating the characteristics of the portions to be classified. It should be noted that the partial support vector machines of the present embodiment carry out their calculation by taking into account the overall characteristic amounts in addition to the partial characteristic amounts.

The more characteristics of the given category to be classified the portion to be classified has, the larger is the value of the calculation result, that is, the classification function value. By contrast, the more characteristics of another category that is not to be classified that portion has, the smaller is that value of the calculation result. It should be noted that if that portion has an even amount of both the characteristics of the given category and the characteristics of the other category, then the classification function value obtained with the partial support vector machine becomes "0". Consequently, with regard to portions (of the targeted image) where the classification function value obtained with a partial support vector machine has a positive value, scenes that are handled by that partial support vector machine contain more characteristics than other scenes. Thus, the classification function value obtained with the partial support vector machine corresponds to probability information indicating the probability that this portion belongs to a certain category.

The detection number counters (evening scene detection number counter 71b to autumnal scene detection number counter 73b) count the number of portions for which the classification function value obtained with the partial support vector machine is positive. In other words, they count the number of partial images in which the characteristics of the corresponding scene are stronger than the characteristics of other scenes. These detection number counters constitute a portion of the judgment section that judges that the partial targeted image belongs to the corresponding category. That is to say, if the count value of the detection number counter has exceeded a judgment threshold, the CPU 36 of the main controller 31 judges that the partial targeted image belongs to the corresponding category, based on the count value of the detection number counter and the judgment threshold. Consequently, this judgment section can be said to be constituted by the main controller 31. Moreover, the judgment threshold provides a positive judgment that the targeted image belongs to the scene handled by the partial sub-classifier. Consequently, in the following explanations, the judgment threshold for providing this positive judgment is also referred to as "positive count value". A positive count value is determined for each partial sub-classifier. In this embodiment, for the evening scene partial classifier 71, the value "5" is determined, for the flower scene partial classifier 72, the value "9" is determined, for the autumnal scene partial classifier 73, the value "6" is determined, as the positive count value (judgment threshold), as shown in Fig. 16.

If a partial category for an object to be classified is known, then it is also possible to judge other categories based on this category. For example, if the object to be classified contains a portion belonging to a given category, then it can be judged that this object to be classified does not belong to another category whose characteristics differ considerably from that category. For example, if there is a partial image determined to belong to a flower scene during the classification of the targeted image, then it can be judged that the targeted image does not belong to a night scene, whose characteristics are very different from that of a flower scene. Accordingly, if the count value of the detection number counter exceeds another judgment threshold, then the partial sub-classifiers judge, based on the count value of the detection number counter and that other judgment threshold, that the targeted image does not belong to the corresponding category.

This other judgment threshold enables the negative judgment that the targeted image does not belong to a certain scene, which is different from the scene handled by the partial sub-classifier. Consequently, the other judgment threshold for providing such a negative judgment is also referred to as "negative count value" in the following explanations. Like for the positive count values, also for the negative count values, a value is set for each of the partial sub-classifiers. In this embodiment, as shown in Fig. 16, in the evening scene partial classifier 71, the value "1" is set as the negative count value for landscape scenes, and the value "2" is set as the negative count value for night scenes. Furthermore, the value "1" is set as the negative count value for flower scenes and the value "1" is also set as the negative count value for autumnal scenes. While detailed explanations are omitted, also for the evening scene partial classifier 71 and the autumnal scene partial classifier 73, negative count values are set in a similar manner. It should be noted that negative count values are also set for scenes other than the scenes that are classified by the partial sub-classifiers. In the example of Fig. 16, a negative count value for landscape scenes and a negative count value for night scenes are set. Thus, by setting negative count values also for other scenes, it is possible to increase the judgment conditions and to increase the classification properties.

As noted above, the partial support vector machines perform their calculation taking into account the overall characteristic amounts in addition to the partial characteristic amounts. The following is an explanation of this aspect. The partial images contain less information than the overall image. Therefore, it occurs that the classification of categories is difficult. For example, if a given partial image has characteristics that are common for a given scene and another scene, then their classification becomes difficult. Let us assume that the partial image is an image with a strong red tone. In this case, it may be difficult to classify with the partial characteristic amounts alone whether the partial image belongs to an evening scene or whether it belongs to an autumnal scene. In this case, it may be possible to classify the scene to which this partial image belongs by taking into account the overall characteristic amounts. For example, if the overall characteristic amounts indicate an image that is predominantly black, then the probability is high that the partial image with the strong red tone belongs to an evening scene. And if the overall characteristic amounts indicate an image that is predominantly green or blue, then the probability is high that the partial image with the strong red tone belongs to an autumnal scene. Thus, the classification accuracy of the partial support vector machines can be increased by performing the calculation while taking into account the overall characteristic amounts.

The Consolidated Classifier 30H

As mentioned above, the consolidated classifier 30H classifies the scenes of targeted images for which the scene could be decided neither with the overall classifier 30F nor with the partial image classifier 30G. The consolidated classifier 30H of the present embodiment classifies scenes based on the probability information determined with the overall sub-classifiers (the support vector machines). More specifically, the consolidated classifier 30H selectively reads out the probability information for positive values from the plurality of sets of probability information stored in the probability information storage section 37f of the memory 37. Then, the probability information with the highest value among the sets of probability information that have been read out is specified, and the corresponding scene is taken as the scene of the targeted image. For example, if the probability information for landscape scenes and autumnal scenes is selectively read out and if the probability information for landscape scenes has the value "1.25" and the probability information for landscape scenes has the value "1.10", then the consolidated classifier 30H classifies the targeted image as being a landscape scene. And if none of the sets of probability information has a positive value, then the consolidated classifier 30H classifies the targeted image as being another scene. By providing such a consolidated classifier 30H, it is possible to classify suitable scenes, even when the characteristics of the scene to which the image belongs do not appear strongly in the targeted image. That is to say, it is possible to improve the classification properties.

The Result Storage Section 37j

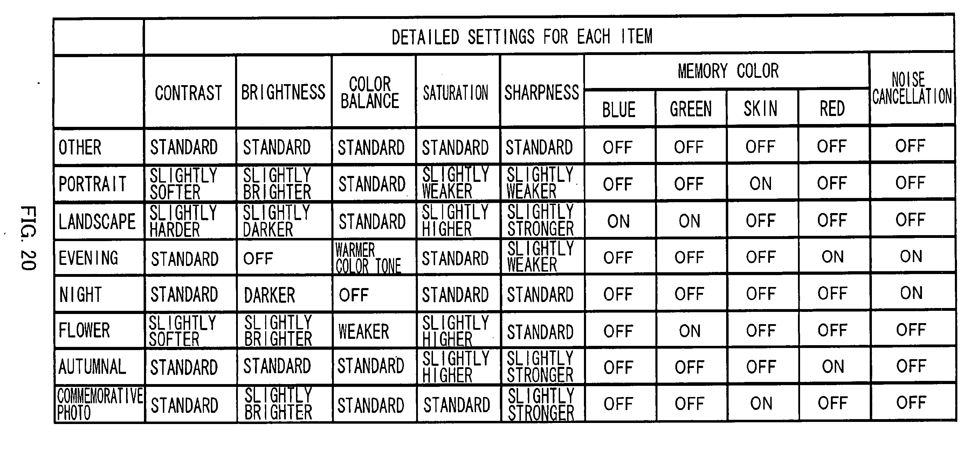

The result storage section 37j stores the classification results of the obj ect to be classified that have been determined by the classification processing section 30I. For example, if, based on the classification results according to the overall classifier 30F and the partial image classifier 30G, a positive flag is stored in the positive flag storage section 37h, then the information is stored that the object to be classified belongs to the category corresponding to this positive flag. If a positive flag is set that indicates that the targeted image belongs to a landscape scene, then result information indicating that the targeted image belongs to a landscape scene is stored. Similarly, if a positive flag is set that'indicates that the targeted image belongs to an evening scene, then result information indicating that the targeted image belongs to an evening scene is stored. It should be noted that for targeted images for which a negative flag has been stored for all scenes, result information indicating that the targeted image belongs to another scene is stored. The classification result (result information) stored in the result storage section 37j is looked up by later processes. In the multifunctional apparatus 1, the image enhancement section 30C (see Fig. 3) looks up the classification result and uses it for an image enhancement. For example, as shown in Fig. 20, the contrast, brightness, color balance or the like can be adjusted in accordance with the classified scene.

The Image Classification Process

The following is an explanation of the image classification process performed by the main controller 31. By executing this image classification process, the main controller 31 functions as a face detection section 30A and a scene classification section 30B (characteristic amount obtaining section 30E, overall classifier 30F, partial image classifier 30G, consolidated classifier 30H, and result storage section 37j). Moreover, the computer program executed by the main controller 31 includes code for realizing the image classification process.

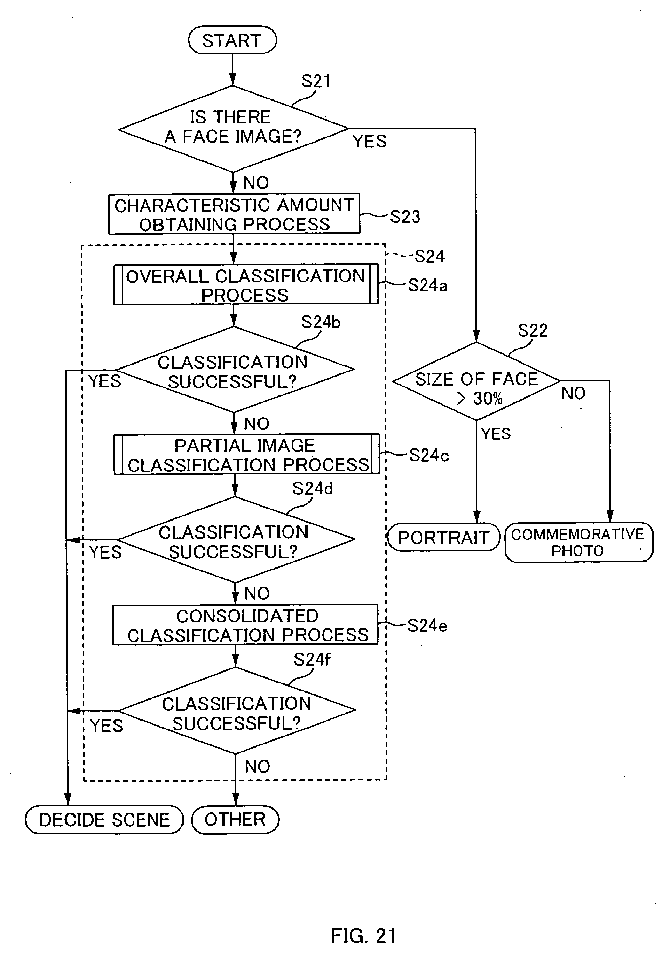

As shown in Fig. 21, the main controller 31 reads in data of an image to be processed, and judges whether it contains a face image (S21). The presence of a face image can be judged by various methods. For example, the main controller 31 can determine the presence of a face image based on the presence of a region whose standard color is skin-colored and the presence of an eye image and a mouth image within that region. In the present embodiment, it is assumed that a face image of at least a certain area (for example, at least 20 X 20 pixels) is subject to detection. If it is judged that there is a face image, then the main controller 31 obtains the proportion of the area of the face image in the targeted image and judges whether this proportion exceeds a predetermined threshold (S22) . For example, it judges whether the proportion of the area of the face image exceeds 30%. Then, if the predetermined threshold is exceeded, the main controller classifies the targeted image as a portrait scene. If the predetermined threshold is not exceeded, then the main controller 31 classifies the targeted image as a scene of a commemorative photograph. The classification results are stored in the result storage section 37j.

If the targeted image contains no face image, then the main controller 31 carries out a process of obtaining characteristic amounts (S23). In the process of obtaining the characteristic amounts, the characteristic amounts are obtained based on the data of the targeted image. That is to say, the overall characteristic amounts indicating the overall characteristics of the targeted image and the partial characteristic amounts indicating the partial characteristics of the targeted image are obtained. It should be noted that the obtaining of these characteristic amounts has already been explained above (see S11 to S15, Fig. 6), and further explanations are omitted. Then, the main controller 31 stores the obtained characteristic amounts in the characteristic amount storage section 37e of the memory 37.

When the characteristic amounts have been obtained, the main controller 31 performs a scene classification process (S24). In this scene classification process, the main controller 31 first functions as the overall classifier 30F and performs an overall classification process (S24a). In this overall classification process, classification is performed based on the overall characteristic amounts. Then, when the targeted image could be classified by the overall classification process, the main controller 31 determines the scene of the targeted image as the classified scene (YES in S24b). For example, it determines the image to be the scene for which a positive flag has been stored in the overall classification process. Then, it stores the classification result in the result storage section 37j. It should be noted that the details of the overall classification process are explained later. If the scene was not determined in the overall classification process, then the main controller 31 functions as a partial image classifier 30G and performs a partial image classification process (S24c). In this partial image classification process, classification is performed based on the partial characteristic amounts. Then, if the targeted image could be classified by the partial image classification process, the main controller 31 determines the scene of the targeted image as the classified scene (YES in S24d), and stores the,classification result in the result storage section 37j. It should be noted that the details of the partial image classification process are explained later. If the scene was also not determined by the partial image classifier 30G, then the main controller 31 functions as a consolidated classifier 30H and performs a consolidated classification process (S24e). In this consolidated classification process, the main controller 31 reads out the probability information with positive values from the probability information storage section 37f and determines the image to be a scene corresponding to the probability information with the largest value, as explained above. Then, if the targeted image could be classified by the consolidated classification process, the main controller 31 determines the scene of the targeted image as the classified scene (YES in S24f). On the other hand, if the targeted image could also not be classified by the consolidated classification process, and negative flags have been stored for all scenes, then the targeted image is classified as being another scene (NO in S24f). It should be noted that in the consolidated classification process, the main controller 31 functioning as the consolidated classifier 30H first judges whether negative flags are stored for all scenes. Then, if it is judged that negative flags are stored for all scenes, the image is classified as being another scene, based on this judgment. In this case, the processing can be performed by confirming only the negative flags, so that the processing can be sped up.

The Overall Classification Process

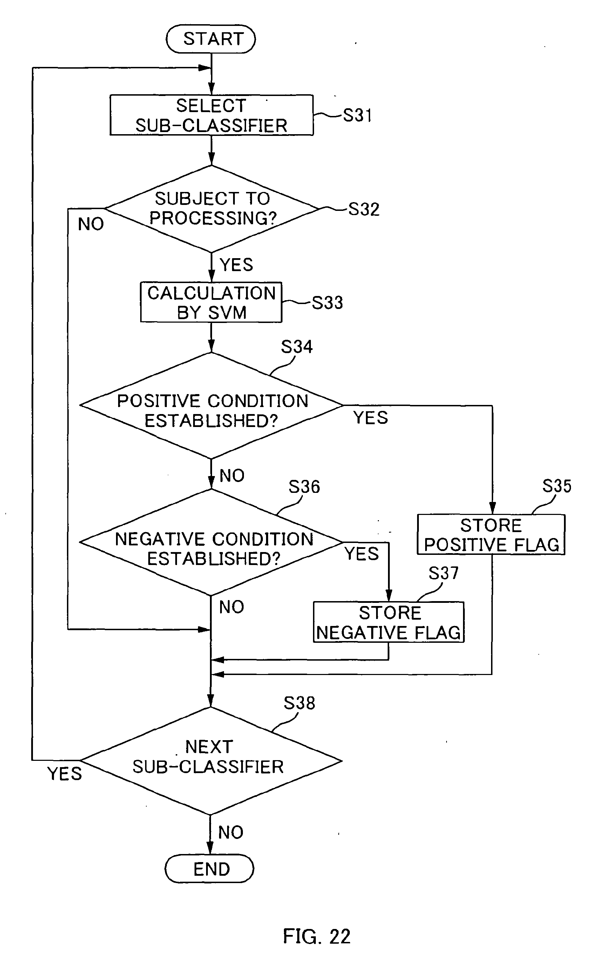

The following is an explanation of the overall classification process. As shown in Fig. 22, the main controller 31 first selects an overall sub-classifier to perform classification (S31). As shown in Fig. 5, in this overall classifier 30F, the landscape scene classifier 61, the evening scene classifier 62, the night scene classifier 63, the flower scene classifier 64, and the autumnal scene classifier 65 are ordered by priority in that order. Consequently, the landscape scene classifier 61, which has the highest priority, is selected in the initial selection process. Then, when the classification with the landscape scene classifier 61 is finished, the evening scene classifier 62, which has the second highest priority, is selected. This is similar for the other overall sub-classifiers as well. That is to say, after the evening scene classifier 62, the night scene classifier 63, which has the third highest priority, is selected, after the night scene classifier 63, the flower scene classifier 64, which has the fourth highest priority, is selected, and after the flower scene classifier 64, the autumnal scene classifier 65, which has the lowest priority, is selected.

When an overall sub-classifier has been selected, the main controller 31 judges whether the scene classified by the selected overall sub-classifier is subjected to classification processing (S32). This judgment is carried out based on positive flags and negative flags. That is to say, if a positive flag has been stored for a given scene, then the targeted image is decided to be a scene corresponding to that positive flag. Therefore, there is no need to classify for the other scenes. Therefore, the other scenes can be excluded from the classification process. Similarly, if a negative flag has been set for a given scene, then the targeted image is not classified for the scene corresponding to this negative flag. Therefore, also the scenes corresponding to negative flags can be excluded from the classification process. Let us assume that during the classification with the landscape scene classifier 61, a positive flag for landscape scenes has been stored. In this case, a classification with the remaining classifiers does not need to be carried out. Therefore, it is judged that the scene is not subject to processing (NO in S32), and the classification process is skipped. Let us now assume that during the classification with the landscape scene classifier 61, a negative flag for night scenes has been stored. In this case, the classification with the night scene classifier 63 does not need to be carried out. Therefore, after the classification process with the evening scene classifier 62 is finished, it is judged that the scene is not subject to processing (NO in S32), and the classification process is skipped. By adopting such a configuration, unnecessary classification processing is eliminated, so that the processing can be sped up.

On the other hand, if it is judged in Step S32 that the scene is subject to processing, a calculation with the support vector machine is carried out. In other words, probability information is obtained based on the overall characteristic amounts. In this situation, the main controller 31 functions as the overall sub-classifier corresponding to the scene being processed, and obtains the classification function value serving as the probability information by a calculation based on the overall color average, the overall color variance, the moments and the appended Exif information.

When the classification function value has been obtained, it is judged whether a condition for positive judgment is established (S34). That is to say, the main controller 31 judges whether a condition is established for deciding that the targeted image is a certain scene. In this example, this is judged by comparing the classification function value with a positive threshold. For example, as shown in Fig. 15, if the classification function value in the landscape scene classifier 61 exceeds the value "1.72", then a positive flag corresponding to landscape scenes is stored in the positive flag storage section 37h (S35) . And if, as shown in Fig. 16, the classification function value in the evening scene classifier 62 exceeds the value "2.99", then a positive flag corresponding to evening scenes is stored in the positive flag storage section 37h.

If a positive condition has not been established, then it is judged whether a negative condition has been established (S36) . That is to say, the main controller 31 judges whether a condition for deciding that the targeted image does not belong to a given scene is established. In this example, this is judged by comparing the classification function value with a negative threshold. For example, as shown in Figs. 15 and 16, if the classification function value in the landscape scene classifier 61 is lower than the value "-1.01", then a negative flag corresponding to landscape scenes is stored in the negative flag storage section 37i (S37) . Furthermore, if the classification function value is larger than "1.70", then a negative flag corresponding to evening scenes is stored, if the classification function value is larger than "1.05", then a negative flag corresponding to autumnal scenes is stored, and if the classification function value is larger than "-0.44", then a negative flag corresponding to night scenes is stored. It should be noted that the negative threshold for flower scenes is set to "1.83", which is larger than the positive threshold for landscape scenes. Since judgment by a positive threshold is given preference to judgment by a negative threshold, a negative flag corresponding to flower scenes is not stored by the landscape scene classifier 61. While it is not explained in further detail, the judgment by negative thresholds is performed in a similar manner also for the other sub-classifiers.

After the storing of the positive flag (S35) or the negative flags (S37), or after it has been judged that a negative condition is not established (NO in S36), it is judged whether there is a further overall sub-classifier (S38). Here, the main controller 31 judges whether the processing has been finished up to that of the autumnal scene classifier 65, which has the lowest priority. Then, if the processing has been finished up to that of the autumnal scene classifier 65, it is judged that there is no further classifier, and the sequence of the overall classification process is finished. On the other hand, if the processing up to that of the autumnal scene classifier 65 has not been finished, then the overall sub-classifier with the next highest priority is selected (S31) and the above-described process is repeated.

The Partial Image Classification Process

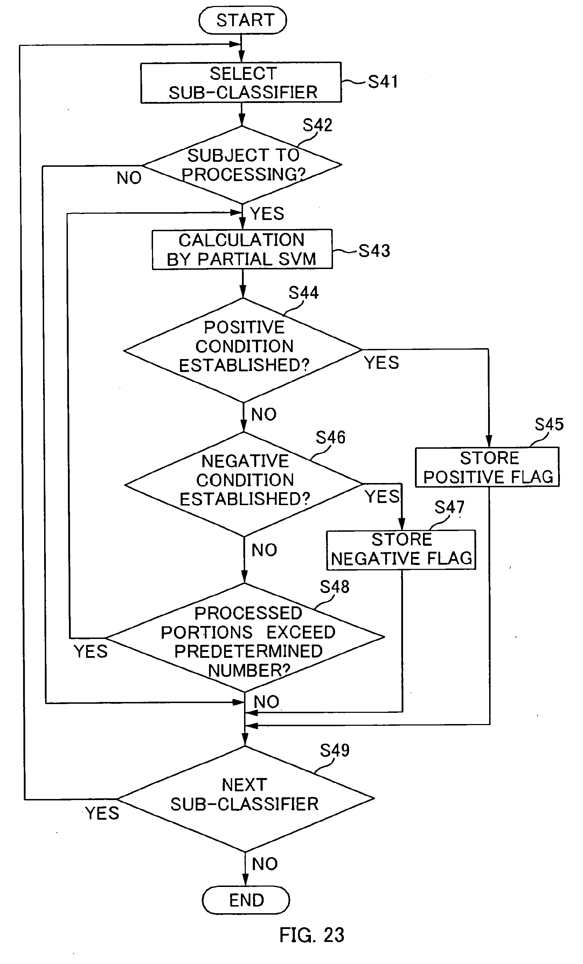

The following is an explanation of the partial image classification process. As shown in Fig. 23, the main controller 31 first selects a partial sub-classifier to perform classification (S41) . As shown in Fig. 5, in this partial image classifier 30G, the evening scene partial classifier 71, the flower scene partial classifier 72, and the autumnal scene partial classifier 73 are ordered by priority in that order. Consequently, the evening scene partial classifier 71, which has the highest priority, is selected in the initial selection process. Then, when the classification with the evening scene partial classifier 71 is finished, the flower scene partial classifier 72, which has the second highest priority, is selected, and after the flower scene partial classifier 72, the autumnal scene partial classifier 73, which has the lowest priority, is selected.

When a partial sub-classifier has been selected, the main controller 31 judges whether the scene classified by the selected partial sub-classifier is subjected to classification processing (S42). This judgment is carried out based on positive flags and negative flags, like in the overall classifier 30F. Here, for the positive flags, the flags stored by the classification with the partial sub-classifiers are used for this judgment, and the flags stored by the classification with the overall classifier are not used for this judgment. This is because when positive flags are set with the overall sub-classifier, the scene is decided by the overall classification process, and the partial image classification process is not carried out. For the negative flags on the other hand, the flags stored by the classification with the partial sub-classifiers and those stored by the classification with the overall sub-classifiers are used for the judgment. Also in this partial image classification process, if it is judged that the scene is not subject to processing, the classification process is skipped (NO in S42). Therefore, unnecessary classification processing is eliminated, so that the processing can be sped up.

On the other hand, if it is judged in Step S42 that the scene is subject to processing, a calculation with the partial support vector machine is carried out (S43). In other words, probability information for the partial image is obtained based on the partial characteristic amounts. In this situation, the main controller 31 functions as a partial sub-classifier corresponding to the scene being processed, and obtains the classification function value serving as the probability information by a calculation based on the partial color average and the partial color variance. Then, if the obtained classification function value is a positive value, the corresponding detection number counter is incremented (+1). If the classification function value is not a positive value, then the count value of the detection number counter stays the same. It should be noted that the count value of the detection number counter is reset when processing a new targeted image (new targeted image data).

When the obtaining of the probability information for the partial images and the counter processing has been carried out, it is judged whether a condition for positive judgment is established (S44). That is to say, the main controller 31 judges whether a condition is established for deciding that the targeted image is the scene subject to processing. In this example, this is judged by comparing the count value of the detection number counter with a positive count value. For example, as shown in Fig. 16, if the count value in the evening scene partial classifier 71 exceeds the value "5", then a positive flag corresponding to evening scenes is stored in the positive flag storage section 37h (S45). And if the count value in the flower scene partial classifier 72 exceeds the value "9", then a positive flag corresponding to flower scenes is stored in the positive flag storage section 37h.

If a positive condition has not been established, then it is judged whether a negative condition has been established (S46) . That is to say, the main controller 31 judges whether a condition for deciding that the targeted image does not belong to a given scene is established. In this example, this is judged by comparing the count value with a negative count value. For example, as shown in Fig. 16, if the count value in the evening scene partial classifier 71 exceeds the value "1", then a negative flag corresponding to landscape scenes is stored in the negative flag storage section 37i (S47). Moreover, if the count value exceeds the value "2", then a negative flag corresponding to night scenes is stored. It should be noted that this is similar for other scenes and other partial sub-classifiers.

If a negative condition has not been established (NO in S46), then it is judged whether the number of partial images that have been processed has exceeded-a predetermined number (S48). Here, if this predetermined number has not yet been exceeded, the procedure advances to Step S43 and the above-described process is repeated. On the other hand, if the predetermined number is exceeded or if a positive flag or a negative flag has been stored (S45, S47), then it is judged whether there is a further partial sub-classifier (S49). Here, the main controller 31 judges whether the processing has been finished up to that of the autumnal scene partial classifier 73, which has the lowest priority. Then, if the processing has been finished up to that of the autumnal scene partial classifier 73, it is judged that there is no further classifier, and the sequence of the partial classification process is finished. On the other hand, if the processing up to that of the autumnal scene partial classifier 73 has not been finished, then the partial sub-classifier with the next highest priority is selected (S41) and the above-described process is repeated.

Summary of Classification Processing Section 30I

As should become clear from the above explanations, with this classification processing section 30I, the overall classifier 30F classifies the scene to which a targeted image belongs, based on the overall characteristic amounts, and the partial image classifier 30G classifies the scene to which the targeted image belongs, based on the partial characteristic amounts. Thus, the category to which a given targeted image belongs is classified using a plurality of types of classifiers with different properties, so that the accuracy with which scenes are classified can be improved. Furthermore, the overall classifier 30F includes a plurality of overall sub-classifiers that classify whether the targeted image belongs to a specific scene (predetermined category), the number of overall sub-classifiers corresponding to the number of specific scene types that can be classified (the number of predetermined categories). Thus, the properties can be optimized for each overall sub-classifier individually, and the classification accuracy can be increased.

The overall sub-classifiers carry out the classification of the targeted image based on probability information (classification function values) indicating whether the probability that the targeted image belongs to a specific scene is high or low. That is to say, if the probability indicated by the probability information is within a probability range, specified by a probability threshold, for which it can be decided that the object to be classified belongs to a given category, then the targeted image is classified as belonging to that specific category. Thus, the processing can be sped up while guaranteeing the accuracy of the classification. That is to say, it is possible to achieve a high level of both processing speed and classification accuracy. Moreover, based on probability information, the partial sub-classifiers classify whether an image portion belongs to a specific scene (predetermined category), individually for each of the plurality of partial characteristic amounts obtained from the plurality of sets of partial image data, and count the number of portions that are classified as belonging to a specific scene with a detection number counter. Then, based on this count value, it is classified whether the overall targeted image belongs to a specific scene. Thus, the count value serves as a basis for the judgment, so that the classification processing can be performed efficiently.

In this classification processing section 30I, the classification is performed using the consolidated classifier 30H for targeted images whose scenes could be classified neither with the overall classifier 30F nor with the partial image classifier 30G. This consolidated classifier 30H classifies the scene corresponding to the probability information indicating the highest probability of the probability information (classification function values) obtained for the plurality of scenes for the targeted image as the scene to which the targeted image belongs . By providing this consolidated classifier 30H, classification can be carried out with the consolidated classifier 30H, even if the scene to which an image belongs could not be classified with the overall classifier 30F and the partial image classifier 30G. Therefore, the accuracy of the classification can be improved.

The overall classifier 30F of the classification processing section 30I includes a plurality of overall sub-classifiers with differing classification targets. If the scene to which the targeted image belongs could be decided with the overall sub-classifier of an earlier stage, thema classification with the overall sub-classifiers of the later stages is not carried out. That is to say, if the overall sub-classifier of the earlier stage obtains the probability information with its support vector machine, and if the probability indicated by this probability information is within a probability range, specified by a probability threshold, for which it can be decided that the targeted image belongs to that scene, then a positive flag is stored. In accordance with the stored positive flags, it is judged that the overall sub-classifiers of the later stages do not carry out a classification for this targeted image. In this case, probability information is not obtained by their support vector machines. Consequently, the processing for the scene classification can be sped up. Here, the support vector machine of the overall sub-classifier of an earlier stage and the support vector machines of the overall sub-classifiers of a later stage use the same characteristic amounts. Thus, the process of obtaining the characteristic amounts is shared, so that the processing can be made more efficient.

Moreover, the overall classifier 30F and the partial image classifier 30G of the classification processing section 30I include sub-classifiers performing the classification of the same scenes. In the above-described embodiment, the evening scene classifier 62 of the overall classifier 30F and the evening scene partial classifier 71 of the partial image classifier 30G both classify evening scenes. This is similar for the flower scene classifier 64 and the flower scene partial classifier 72 as well as for the autumnal scene classifier 65 and the autumnal scene partial classifier 73. Moreover, if the scene to which the targeted image belongs could be decided with the overall sub-classifiers (evening scene classifier 62, flower scene classifier 64, and autumnal scene classifier 65), then the partial sub-classifiers (evening scene partial classifier 71, flower scene partial classifier 72, and autumnal scene partial classifier 73) do not perform a classification for the targeted image. Thus, the processing of the scene classification is sped up. Furthermore, the overall sub-classifiers classify the scene to which an image belongs based on the overall characteristic amounts indicating the overall characteristics of the targeted image, and the partial sub-classifiers classify the scene to which an image belongs based on the partial characteristic amounts indicating the partial characteristics of the targeted image. Thus, characteristic amounts that are suitable for the properties of the classifier are used, so that the accuracy of the classification can be increased. For example, with the overall sub-classifiers, a classification is possible that takes into account the overall characteristics of the targeted image, and with the partial sub-classifiers, a classification is possible that takes into account the partial characteristics of the targeted image.

Moreover, with the overall sub-classifiers, a classification by other overall sub-classifiers is not performed in accordance with probability information obtained by the support vector machine of a given overall sub-classifier. That is to say, a given overall sub-classifier compares the obtained probability information with a probability threshold, and can judge that the targeted image does not belong to another scene corresponding to another overall sub-classifier. Then, if it has been judged that the image does not belong to this other scene, a negative flag corresponding to this other scene.is stored. Based on this negative flag, it is judged that the other overall sub-classifier does not carry out a classification for the targeted image. With this configuration, the processing can be made more efficient. Moreover, the probability information obtained with the support vector machine of the given overall sub-classifier is used for the judgment of the scene corresponding to that given overall sub-classifier as well as the judgment of the scene corresponding to the other overall sub-classifier. Thus, the probability information is used in various ways, so that also with regard to this aspect, the processing can be made more efficient.

Furthermore, if the overall classifier 30F has decided that the image does not belong to any of the scenes, based on the probability information obtained with the overall sub-classifiers, then the partial image classifier 30G does not perform a classification for that targeted image. Accordingly, the processing can be sped up.

Other Embodiments

In the embodiment explained above, the object to be classified is an image based on image data, and the classification apparatus is the multifunctional apparatus 1. However, the classification apparatus' classifying images is not limited to the multifunctional apparatus 1. For example, it may also be a digital still camera DC, a scanner, or a computer that can execute a computer program for image processing (for example, retouching software). Moreover, it can also be an image display device that can display images based on image data or an image data storage device that stores image data. Furthermore, the object to be classified is not limited to images. That is to say, any object that can be sorted into a plurality of categories using a plurality of classifiers can serve as the object to be classified.

Furthermore, in the embodiment above, a multifunctional apparatus 1 was described, which classifies the scene of a targeted image, but this includes therein also the disclosure of a category classification apparatus, a category classification method, a method for using a classified category (for example a method for enhancing an image, a method for printing, and a method for ejecting a liquid based on a scene), a computer program, and a storage medium storing a computer program or code.

Moreover, regarding the classifiers, the above-described embodiment explained support vector machines, but as long as they can sort the category of a targeted image, there is no limitation to support vector machines. For example, it is also possible to use a neural network or the AdaBoost algorithm as a classifier.

**Claims**

1. A category classification apparatus comprising:

   an overall classifier that classifies a category to which an image belongs, based on an overall characteristic amount that is obtained from image data, the overall characteristic amount indicating an overall characteristic of the image represented by the image data; and
   a partial classifier that classifies a category to which the image belongs, based on partial characteristic amounts that are obtained from partial image data included in the image data, the partial characteristic amounts indicating characteristics of portions of the image.

2. A category classification apparatus according to claim 1,
   wherein the overall classifier includes a plurality of overall sub-classifiers that classify whether the image belongs to a predetermined category, the number of the overall sub-classifiers corresponding to the number of the predetermined categories.

3. A category classification apparatus according to claim 2,
   wherein, if the image has not been classified as belonging to a first category by a first overall sub-classifier, then the overall classifier causes a second overall sub-classifier that is different from the first overall sub-classifier to classify whether the image belongs to a second category that is different from the first category.

4. A category classification apparatus according to claim 2 or 3, wherein
   if, according to probability information indicating whether a probability that the image belongs to a predetermined category is large or small, the probability indicated by the probability information is within a probability range, specified by a probability threshold, for which it can be decided that the image belongs to the predetermined category,
   then the overall sub-classifiers classify the image as belonging to the predetermined category.

5. A category classification apparatus according to claim 4,
   wherein each of the overall sub-classifiers includes a support vector machine that obtains the probability information from the overall characteristic amount.

6. A category classification apparatus according to any of claims 2 to 5,
   wherein the image data includes a plurality of pixels including color information; and
   the overall sub-classifiers classify the category to which the image belongs, taking a characteristic amount obtained from the color information and appended information that is appended to the image data as the overall characteristic amounts.

**7.** A category classification apparatus according to claim 6,
wherein the appended information is appended Exif information.

**8.** A category classification apparatus according to claim 6 or 7,
wherein the characteristic amounts obtained from the color information include:

average color information obtained by averaging a plurality of sets of the color information;
variance information indicating a variance based on a plurality of sets of the color information; and
moment information indicating a moment based on a plurality of sets of the color information.

**9.** A category classification apparatus according to any of claims 1 to 8,
wherein, if the category to which the image belongs cannot be decided with the overall classifier, the partial classifier classifies the category to which the image belongs.

**10.** A category classification apparatus according to any of claims 1 to 9,
wherein the partial classifier includes a plurality of partial sub-classifiers that classify whether the image belongs to a predetermined category, the number of partial sub-classifiers corresponding to the number of the predetermined categories.

**11.** A category classification apparatus according to claim 10,
wherein the overall classifier includes a plurality of overall sub-classifiers that classify whether the image belongs to a predetermined category, the number of the overall sub-classifiers corresponding to the number of the predetermined categories; and
the partial classifier includes a number of partial sub-classifiers that classify whether the image belongs to a predetermined category, the number being smaller than the number of predetermined categories that can be classified by the overall classifier.

**12.** A category classification apparatus according to claim 10 or 11,
wherein, if the image has not been classified as belonging to a first category by a first partial sub-classifier, then the partial classifier causes a second partial sub-classifier that is different from the first partial sub-classifier to classify whether the image belongs to a second category that is different from the first category.

**13.** A category classification apparatus according to any of claims 10 to 12,
wherein the partial sub-classifiers classify for each of a plurality of partial characteristic amounts obtained from the plurality of sets of partial image data whether or not the portion represented by that partial image data belongs to the predetermined category, and classify whether the image belongs to the predetermined category, based on the number of portions that have been classified as belonging to the predetermined category.

**14.** A category classification apparatus according to claim 13,
wherein the partial sub-classifiers classify whether or not the portion belongs to the predetermined category, based on probability information indicating whether a probability that the portion belongs to the specific category is large or small.

**15.** A category classification apparatus according to claim 14,
wherein each of the partial sub-identifiers includes a support vector machine that obtains the probability information from the partial characteristic amounts.

**16.** A category classification apparatus according to any of claims 10 to 15,
wherein the partial image data includes a plurality of pixels including color information, and
the partial sub-classifiers classify the category to which the image belongs, taking characteristic amounts obtained from the color information as the partial characteristic amounts.

**17.** A category classification apparatus according to claim 16,
wherein the characteristic amounts obtained from the color information include:

average color information obtained by averaging a plurality of sets of the color information; and
variance information indicating a variance based on a plurality of sets of the color information.

**18.** A category classification apparatus according to any of claims 1 to 17, comprising:

a consolidated classifier that
classifies the category to which the image belongs for images whose category cannot be classified by neither the overall classifier nor the partial classifier; and
classifies a predetermined category having probability information indicating that its probability is the highestamong the probability information obtained for each of the plurality of predetermined categories as the category to which the image belongs.

**19.** A category classification apparatus according to any of claims 1 to 18, comprising a characteristic amount obtaining section that obtains the overall characteristic amount and the partial characteristic amounts from the image data.

**20.** A category classification method comprising:

classifying a category to which an image belongs, based on an overall characteristic amount that is obtained from image data, the overall characteristic amount indicating an overall characteristic of the image represented by the image data; and
classifying a category to which the image belongs, based on partial characteristic amounts that are obtained from partial image data included in the image data, the partial characteristic amounts indicating characteristics of portions of the image.

**21.** A storage medium storing a program that is used for a category classification apparatus classifying a category to which image data belongs, the storage medium storing a program that lets the category classification apparatus classify a category to which an image belongs, based on an overall characteristic amount that is obtained from image data, the overall characteristic amount indicating an overall characteristic of the image represented by the image data; and
classify a category to which the image belongs, based on partial characteristic amounts that are obtained from partial image data included in the image data, the partial characteristic amounts indicating characteristics of portions of the image.

FIG. 1

EP 1 959 364 A2

MC

20

30

**PRINTER-SIDE CONTROLLER**

31

35 — MEMORY SLOT
36 — CPU
37 — MEMORY
34 — I/F

BU

CONTROL UNIT — 32

33 — DRIVING SIGNAL GENERATION SECTION

41 — MOTORS

SENSORS 42

HEAD CONTROLLER 43

44 — HEAD

PRINT MECHANISM

40

FIG. 2

FIG. 2A

37

| | |
|---|---|
| 37a | OPERATION PROGRAM |
| 37b | CONTROL PARAMETERS |
| 37c | IMAGE STORAGE SECTION |
| 37d | ATTRIBUTE INFORMATION STORAGE SECTION |
| 37e | CHARACTERISTIC AMOUNT STORAGE SECTION |
| 37f | PROBABILITY INFORMATION STORAGE SECTION |
| 37g | COUNTER SECTION |
| 37h | POSITIVE FLAG STORAGE SECTION |

| LANDSCAPE | EVENING | NIGHT | FLOWER | AUTUMNAL |
|---|---|---|---|---|

| | |
|---|---|
| 37i | NEGATIVE FLAG STORAGE SECTION |

| LANDSCAPE | EVENING | NIGHT | FLOWER | AUTUMNAL |
|---|---|---|---|---|

| | |
|---|---|
| 37j | RESULT STORAGE SECTION |

FIG. 2B

30

PRINTER-SIDE CONTROLLER

30A

FACE
DETECTION
SECTION

30B

SCENE
CLASSIFICATION
SECTION

30C

IMAGE
ENHANCEMENT
SECTION

IMAGE DATA
IN QUESTION
(APPENDED Exif
INFORMATION)

IMAGE STORAGE
SECTION

~37c

APPENDED
INFORMATION
STORAGE SECTION

~37d

30D

MECHANISM
CONTROLLER

PRINT
MECHANISM

~40

FIG. 3

30B

### SCENE CLASSIFICATION SECTION

30E

CHARACTERISTIC AMOUNT OBTAINING SECTION

37c — IMAGE STORAGE SECTION

30I

OVERALL CLASSIFIER — 30F

PARTIAL IMAGE CLASSIFIER — 30G

CONSOLIDATED CLASSIFIER — 30H

RESULT STORAGE SECTION — 37j

FIG. 4

FIG. 5

START

OBTAIN PARTIAL IMAGE DATA — S11

CONVERSION RGB→YCC — S12

OBTAIN PARTIAL CHARACTERISTIC AMOUNTS
(COLOR AVERAGE, COLOR VARIANCE) — S13

YES UNPROCESSED PARTIAL IMAGE DATA LEFT? — S14

NO

OBTAIN OVERALL CHARACTERISTIC AMOUNTS
(COLOR AVERAGE, COLOR VARIANCE, MOMENTS) — S15

END

FIG. 6

HP1
SV12
CA1
SV21
SV11
HP2
CA2
SV22

LINEAR SVM

FIG. 7

NON-LINEAR SVM

FIG. 8

| | | CLASSIFICATION RESULT | |
|---|---|---|---|
| | | P (Positive) | N (Negative) |
| CORRECT ANSWER | P | TP (True Positive) | FN (False Negative) |
| | N | FP (False Positive) | TN (True Negative) |

$$\text{RECALL (RECALL RATIO, DETECTION RATIO)} = \frac{TP}{TP + FN}$$

$$\begin{array}{l}\text{PRECISION} \\ \text{(PRECISION, RATIO OF CORRECT ANSWERS)}\end{array} = \frac{TP}{TP + FP}$$

FIG. 9

LANDSCAPE

FIG. 10

EVENING

FIG. 11

## NIGHT

FIG. 12

## FLOWER

FIG. 13

AUTUMNAL

FIG. 14

FIG. 15

OVERALL CLASSIFIER

|  | LANDSCAPE | EVENING | NIGHT | FLOWER | AUTUMNAL |
|---|---|---|---|---|---|
| SCENE SUBJECT TO CLASSIFICATION | | | | | |
| POSITIVE THRESHOLD | 1.72 | 2.99 | 1.14 | 1.43 | 0.54 |
| NEGATIVE THRESHOLD | −1.01 | −2.00 | −1.27 | −1.90 | −1.84 |
| NEGATIVE THRESHOLDS FOR SCENES NOT SUBJECT TO CLASSIFICATION NEGATIVE THRESHOLD | | | | | |
| LANDSCAPE | − | −0.75 | −0.73 | −0.58 | −0.64 |
| EVENING | 1.70 | − | 1.30 | −0.49 | −0.61 |
| NIGHT | −0.44 | −0.61 | − | −0.63 | −0.71 |
| FLOWER | 1.83 | −0.66 | −0.57 | − | −0.23 |
| AUTUMNAL | 1.05 | −0.62 | −0.64 | 0.01 | − |

PARTIAL IMAGE CLASSIFIER
(NUMBER OF DETECTED PARTIAL IMAGES)

|  | LANDSCAPE | EVENING | NIGHT | FLOWER | AUTUMNAL |
|---|---|---|---|---|---|
| SCENE SUBJECT TO CLASSIFICATION | | | | | |
| POSITIVE THRESHOLD | − | 5 | − | 9 | 6 |
| NEGATIVE THRESHOLDS FOR SCENES NOT SUBJECT TO CLASSIFICATION NEGATIVE THRESHOLD | | | | | |
| LANDSCAPE | − | 1 | − | 13 | 2 |
| EVENING | − | − | − | 1 | 2 |
| NIGHT | − | 2 | − | 1 | 1 |
| FLOWER | − | 1 | − | − | 1 |
| AUTUMNAL | − | 1 | − | 7 | − |

FIG. 16

PT(1.72)

FIG. 17

FIG. 18

FIG. 19

**DETAILED SETTINGS FOR EACH ITEM**

| | CONTRAST | BRIGHTNESS | COLOR BALANCE | SATURATION | SHARPNESS | MEMORY COLOR | | | | NOISE CANCELLATION |
| --- | --- | --- | --- | --- | --- | --- | --- | --- | --- | --- |
| | | | | | | BLUE | GREEN | SKIN | RED | |
| OTHER | STANDARD | STANDARD | STANDARD | STANDARD | STANDARD | OFF | OFF | OFF | OFF | OFF |
| PORTRAIT | SLIGHTLY SOFTER | SLIGHTLY BRIGHTER | STANDARD | SLIGHTLY WEAKER | SLIGHTLY WEAKER | OFF | OFF | ON | OFF | OFF |
| LANDSCAPE | SLIGHTLY HARDER | SLIGHTLY DARKER | STANDARD | SLIGHTLY HIGHER | SLIGHTLY STRONGER | ON | ON | OFF | OFF | OFF |
| EVENING | STANDARD | OFF | WARMER COLOR TONE | STANDARD | SLIGHTLY WEAKER | OFF | OFF | OFF | ON | ON |
| NIGHT | STANDARD | DARKER | OFF | STANDARD | STANDARD | OFF | OFF | OFF | OFF | ON |
| FLOWER | SLIGHTLY SOFTER | SLIGHTLY BRIGHTER | WEAKER | SLIGHTLY HIGHER | STANDARD | OFF | ON | OFF | OFF | OFF |
| AUTUMNAL | STANDARD | STANDARD | STANDARD | SLIGHTLY HIGHER | SLIGHTLY STRONGER | OFF | OFF | OFF | ON | OFF |
| COMMEMORATIVE PHOTO | STANDARD | SLIGHTLY BRIGHTER | STANDARD | STANDARD | SLIGHTLY STRONGER | OFF | OFF | ON | OFF | OFF |

FIG. 20

START

S21

IS THERE
A FACE IMAGE?                    YES

NO

CHARACTERISTIC AMOUNT
OBTAINING PROCESS          S23

S24
OVERALL CLASSIFICATION
PROCESS                    S24a

S24b

CLASSIFICATION
YES    SUCCESSFUL?

NO

PARTIAL IMAGE
CLASSIFICATION PROCESS      S24c

S24d

CLASSIFICATION
YES    SUCCESSFUL?

NO

CONSOLIDATED
CLASSIFICATION PROCESS      S24e

S24f

CLASSIFICATION
YES    SUCCESSFUL?

NO

S22

SIZE OF FACE
> 30%          NO

YES

PORTRAIT          COMMEMORATIVE
PHOTO

DECIDE SCENE          OTHER

FIG. 21

START

SELECT
SUB-CLASSIFIER — S31

SUBJECT TO
PROCESSING? — S32

NO

YES

CALCULATION
BY SVM — S33

S34

POSITIVE CONDITION
ESTABLISHED?

YES

NO

S36

NEGATIVE CONDITION
ESTABLISHED?

YES

NO

S35

STORE
POSITIVE FLAG

S37

STORE
NEGATIVE FLAG

S38

NEXT
SUB-CLASSIFIER

YES

NO

END

FIG. 22

START

SELECT
SUB-CLASSIFIER —S41

S42

SUBJECT TO
PROCESSING?

NO

YES

CALCULATION
BY PARTIAL SVM —S43

S44

POSITIVE
CONDITION
ESTABLISHED?

YES

NO

S46

NEGATIVE
CONDITION
ESTABLISHED?

YES

NO

S45

STORE
POSITIVE FLAG

S47

STORE
NEGATIVE FLAG

S48

PROCESSED
PORTIONS EXCEED
PREDETERMINED
NUMBER?

YES

NO

S49

NEXT
SUB-CLASSIFIER

YES

NO

END

FIG. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007038349 A
- JP 2007315243 A

- WO 200430373 A